(19) Europäisches Patentamt
European Patent Office
Office européen des brevets

(11) **EP 3 741 887 A1**

(12) **EUROPÄISCHE PATENTANMELDUNG**

(43) Veröffentlichungstag:
**25.11.2020   Patentblatt 2020/48**

(51) Int Cl.:
***D01F 13/02*** *(2006.01)*

(21) Anmeldenummer: **19175647.7**

(22) Anmeldetag: **21.05.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Aurotec GmbH
4844 Regau (AT)**

(72) Erfinder:
- **ZIKELI, Stefan
  4844 Regau (AT)**
- **ECKER, Friedrich
  4850 Timelkam (AT)**
- **ZAUNER, Philipp
  4840 Vöcklabruck (AT)**

(74) Vertreter: **Sonn & Partner Patentanwälte
Riemergasse 14
1010 Wien (AT)**

(54) **VERFAHREN UND VORRICHTUNG ZUM REGENERIEREN EINES LÖSUNGSMITTELS VON ZELLULOSE AUS EINEM SPINNVERFAHREN**

(57)    Die Erfindung betrifft ein Verfahren und eine Vorrichtung zur Regeneration eines Lösungsmittels von Zellulose bei einem Zelluloseformkörperherstellungsverfahren, umfassend die Schritte Starten eines kontinuierlichen Verfahrens zur Herstellung fester Zelluloseformkörper aus einem Zelluloselösung, welches die Schritte umfasst i) Zur-Verfügung-Stellen einer Zelluloselösung aus gelöster Zellulose und einem Zellulose-Lösungsmittel und vorzugsweise einem Nicht-Lösungsmittel, insbesondere bevorzugt Wasser, ii) Formen der Zelluloselösung in eine gewünschte geometrische Form, iii) Verfestigen der geformten Zelluloselösung zu Zelluloseformkörpern in einer Koagulationsflüssigkeit, iv) Waschen der Zelluloseformkörper, wobei beim Starten und/oder während des kontinuierlichen Verfahrens Formkörperabfälle der Zelluloselösung in einer ungewünschten Form anfallen, Sammeln der Formkörperabfälle der ungewünschten Form, Zerkleinern der Formkörperabfälle, Extrahieren von Lösungsmittel aus den zerkleinerten Formkörperabfällen.

EP 3 741 887 A1

**Beschreibung**

Die vorliegende Erfindung betrifft ein Verfahren um Lösungsmittel von Zellulose in einem Spinnverfahren zu regenerieren.

**Hintergrund der Erfindung**

Unterschiedliche Spinnverfahren zellulosischer Materialien sind bekannt, insbesondere das Viskose-Verfahren und das Lyocellverfahren. Lyocell ist ein, von der BISFA (The International Bureau for the Standardization of Man-Made Fibres) vergebener generischer Gattungsname für Zellulosefasern, welche aus Zellulose ohne Ausbildung eines Derivates hergestellt werden. Während das Viskose-Verfahren auf einer alkalischen Derivatisierung der Zellulose basiert, um diese in eine spinnbare, gelöste Form zu überführen, nutzt das Lyocellverfahren Lösungsmittel von Zellulose ohne diese chemisch zu verändern (siehe Zhang et al., BioResources 13(2), 2018: 4577-4592 zu einer Zusammenfassung der Unterschiede dieser Verfahren). Allerdings erfordert das Lyocellverfahren eine energieintensive Regeneration des Lösungsmittels, welche der Hauptgrund für die hohen Kosten und die geringe Wirtschaftlichkeit sind (Perepelkin, Fibre Chemistry 39(2), 2007: 163-172). Beispielsweise schlägt US 8,932,471 einen dreistufigen Verdampfungsprozess vor, um aus einer im Spinnprozess anfallenden lösungsmittelhaltigen Flüssigkeit Wasser abzudampfen, um die lösungsaktive Substanz (N-Methylmorpholin-N-oxid; kurz NMMO oder NMMNO) anzureichern, sodass das erhaltene Gemisch erneut zur Lösung von Zellulose verwendet werden kann. Diese Verdampfung ist äußert energieintensiv.

Eine Zusammenfassung des Lyocellverfahrens ist in Singha, International Journal of Materials Engineering 2012, 2(3): 10-16 zu finden. Kurz, das Verfahren umfasst die Schritte Lösen von Zellulose aus einem zellulosischen Brei, z.B. Holzbrei. Als Lösungsmittel kann eine NMMO-Wassergemisch verwendet werden, wobei der NMMO-Anteil 76-78% für ein Auflösen bei 70°C-90°C betragen sollte. Die erhaltene Zelluloselösung wird filtriert, durch einen Extrusionsprozess in ein Spinnbad (Bad aus einem NMMO-Wasser Gemisch mit einem NMMO-Anteil unter der Lösungsgrenze für Zellulose) versponnen, die auskoagulierte Zelluloselösung wird gewaschen, getrocknet und zu Fasern der gewünschten Länge geschnitten. Aus dem Spinn- und Waschprozessen anfallendes Lösungsmittel wird gereinigt (Filtern, Ionenaustausch) und durch Verdampfen des hohen Wasseranteils auf eine NMMO-Konzentration gebracht, sodass das Gemisch erneut zum Lösen von Zellulose geeignet ist. Zum Ersatz nicht regenerierten NMMOs wird neues NMMO zugesetzt.

**Zusammenfassung der Erfindung**

Ein Problem bei den bisherigen Verfahren ist, dass die Regeneration von Lösungsmittel nicht vollständig ist. Zudem ist es ein Problem, dass im Lyocellverfahren diverse Stationen vorhanden sind, in denen Lösungsmittel verloren gehen kann.

Der Erfindung liegt daher die Aufgabe zugrunde, ein verbessertes Verfahren mit effizienterer Regeneration des Zelluloselösungsmittels vorzusehen. Insbesondere soll die Rückführung des wässrigen Lösungsmittels von Zellulose erreicht werden, damit die Wirtschaftlichkeit von Zellulosefaserherstellungsprozessen verbessert wird.

Die Erfindung betrifft ein Verfahren zum Extrahieren oder zur Regeneration eines Lösungsmittels von Zellulose bei einem Zelluloseformkörperherstellungsverfahren, umfassend die Schritte

A) kontinuierliches oder diskontinuierliches Verfahren zur Herstellung fester Zelluloseformkörper aus einer Zelluloselösung, welches die Schritte umfasst

i) Zur-Verfügung-Stellen einer Zelluloselösung aus gelöster Zellulose und einem Zellulose-Lösungsmittel und vorzugsweise weiters einem Nicht-Lösungsmittel, insbesondere bevorzugt Wasser,
ii) Formen der Zelluloselösung in eine gewünschte geometrische Form,
iii) Verfestigen der geformten Zelluloselösung zu Zelluloseformkörpern in einer Koagulationsflüssigkeit, iv) Herauslösen oder Extrahieren des Lösungsmittels aus den Zelluloseformkörpern,

wobei während des kontinuierlichen oder diskontinuierlichen Verfahrens Formkörperabfälle der Zelluloselösung in einer ungewünschten und optional der gewünschten Form anfallen,
B) Sammeln der Formkörperabfälle der ungewünschten Form und optional der gewünschten Form,
C) Zerkleinern der Formkörperabfälle aus Schritt B),
D) Extrahieren von Lösungsmittel aus den zerkleinerten Formkörperabfällen.

Die Erfindung betrifft weiters eine Vorrichtung zur Durchführung dieses Verfahrens. Z.B. betrifft die Erfindung eine Vorrichtung zur Regeneration eines Lösungsmittels von Zellulose bei einem Verfahren zur Herstellung von Zelluloseformkörper, umfassend eine Spinnanlage mit einem Extruder, einem Behälter für Koagulationsflüssigkeit, welche nach einem Spalt unter dem Extruder angeordnet ist und einer Abzugsvorrichtung für verfestigte Zelluloseformkörper aus dem Behälter, ein Feststoffsammelbehälter für verfestigte Zelluloseformkörper und ein Zerkleinerer für verfestigte Zelluloseformkörper. Die Erfindung betrifft auch die Verwendung der Vorrichtung zum Sammeln und Zerkleinern der verfestigten Zelluloseformkörper und zur Durchführung des erfindungsgemäßen Verfahrens.

Alle Aspekte, Vorrichtung und Verfahren, werden im Folgenden gemeinsam näher erläutert, wobei sich die näheren Details stets auf beide Aspekte beziehen: Beschreibungen des Verfahrens oder von Verfahrensschritten beziehen sich auf die Vorrichtung im Sinne von Vorrichtungsteilen für diese Verfahren oder Schritte; Beschreibungen der Vorrichtung beziehen sich auch auf Mittel zur Durchführung des Verfahrens.

## Figurenbeschreibung

Figur 1 zeigt Anfall-Orte der lösungsmittelhaltigen Abfallströme im Lyocell-Prozess.
Figur 2 zeigt Stückgut eines Mischabfalls nach dem Vorzerkleinerungsschritt. Maße in cm.
Figur 3 zeigt Zellulose-Abfallprodukt nach der Extraktion des Lösungsmittels und nach Entwässerung.
Figur 4 zeigt ein vereinfachtes Blockschaltbild eines Lösungsmittel-Rückführungsverfahrens.
Figur 5 illustriert die NMMNO-Gesamtbilanz einer Lyocell-Produktions anlage.
Figur 6 zeigt einen Zerkleinerer.
Figur 7 zeigt einen Rotor mit Schneidelementen eines Zerkleinerers.
Figur 8 zeigt einen Rotor mit spiralförmigem Zerkleinerer (a), einen Rotor mit gezahnten Schneidkanten und eine dazu gegengleiche gezahnte Gegenkante (b) und eine seitliche Ansicht der Positionierung des Rotors gegenüber den Gegenkanten in einem Zerkleinerer (b).
Figur 9 zeigt Siebe für einen Zerkleinerer.

## Detaillierte Beschreibung der Erfindung

Die Lösungsmittel von Zellulose sind vergleichsweise sehr teuer und müssen daher über intensive Kreislaufschließungen in den Prozess zurückgeführt werden. Obwohl das Lyocell Verfahren seit vielen Jahren erfolgreich zur Herstellung von Zelluloseprodukten eingesetzt wird, sind hohe Rückgewinnungsraten von > 99,5% notwendig, um ökonomische und ökologische Belange einhalten und erreichen zu können. Zusätzliche Erhöhungen der Rückgewinnungsrate des Lösungsmittels, selbst im geringen Maßstab über das übliche hinaus, sind bereits ein wesentlicher Vorteil.

Gemäß dem erfindungsgemäßen Verfahren werden Lösungsmittel von Zellulose gesammelt und regeneriert. In einem Zelluloseformkörperherstellungsverfahren, wie dem Lyocellverfahren, fallen an diversen Schritten Abfälle, die noch Lösungsmittel enthalten, an. Diese Abfälle können Flüssigkeiten oder Feststoffe (Formkörperabfälle) sein. Aus den Formkörperabfällen können Flüssigkeiten mit Lösungsmittel extrahiert werden, welche gemeinsam mit den direkten Flüssigkeitsabfällen des Lyocellverfahrens (oder dergleichen) behandelt werden, um das Lösungsmittel für eine erneute Verwendung im Verfahren zu sammeln oder zu regenerieren.

Formkörper werden üblicherweise kontinuierlich hergestellt. Ebenso ist die diskontinuierliche Vorgehensweise. Insbesondere beim Starten eines kontinuierlichen Verfahrens fallen viele Formkörperabfälle an, die erfindungsgemäß gesammelt und behandelt werden. Ein Verfahren zur Herstellung fester Zelluloseformkörper aus einer Zelluloselösung, wie das Lyocellverfahren, umfasst folgende Schritte:

i) Zur-Verfügung-Stellen einer Zelluloselösung aus gelöster Zellulose und eines Zellulose-Lösungsmittels und vorzugsweise einem Nicht-Lösungsmittel, insbesondere bevorzugt Wasser,
ii) Formen der Zelluloselösung in eine gewünschte geometrische Form,
iii) Verfestigen der geformten Zelluloselösung zu Zelluloseformkörpern in einer Koagulationsflüssigkeit,
iv) Herauslösen oder extrahieren des Lösungsmittels aus den Zelluloseformkörpern, z.B. durch Nicht-Lösungsmittel, vorzugsweise Wasser oder wässriges Medium, und optional Waschen der Zelluloseformkörper.

Dies sind die wesentlichen Schritte. Weitere Details können aus der eingangs zitierten Literatur und der folgenden detaillierten Beschreibung entnommen werden. Z.B. wird üblicherweise die Zelluloselösung durch Extrudieren aus einem Extruder und Strecken in einem Gasspalt zwischen Extruder der Koagulationsflüssigkeit geformt. Das Formen oder Extrudieren wird auch als "Spinnen" bezeichnet, insbesondere wenn Fasern oder Filamente als Formkörper erhalten werden sollen. Die vorliegende Erfindung ist allerdings nicht auf Fasern oder Filamente eingeschränkt und alle erfindungsmäßigen Aspekte, die für diese Formkörper beschrieben werden, gelten auch für andere Formkörper, wie Folien, Vliese oder Hohlschläuche.

Diese beschriebenen Formkörper und alle verfahrensgemäßen Vor- und Zwischenprodukte dieser Formkörper werden in dem erfindungsgemäßen Verfahren als gewünschte geometrische Form bezeichnet.

Alle Formkörper, die nicht einer gewünschten geometrischen Form entsprechen und sich im Produktionsverfahren dieser Zelluloseformkörper nicht in eine gewünschte geometrische Form überführen lassen, werden in dem erfindungsgemäßen Verfahren als ungewünschte geometrische Form bezeichnet.

Die Art des Formkörpers wird durch die Form und Art der Extrusionsdüse und deren Öffnungen bzw. deren Anordnung bestimmt. Beispielsweise kann die gewünschte Form Filamente sein, welche eine homogene Dicke aufweisen sollten, z.B. in einem Toleranzbereich von +/- 10% oder weniger.

Die erfindungsgemäße Rückgewinnung des Lösungsmittels in späteren Schritten ist davon unabhängig. Die geformte Zelluloselösung kann aus der Koagulationsflüssigkeit über eine Abzugsvorrichtung, beispielsweise wie in WO 2013/030400 A1 beschrieben, ausgetragen werden. Im Koagulationsflüssigkeitsbehälter kann dabei ein Umlenken der abgezogenen koagulierten Zelluloselösung (Formkörper) vorgenommen werden, z.B. wie in EP 18191628.9 beschrieben.

Insbesondere beim "Anfahren" oder "Starten" des Verfahrens fallen vermehrt Formkörperabfälle, also verfestigte oder koagulierte Zelluloselösung in ungewünschter Form an. Auch beim kontinuierlichen Betrieb können stets derartige Abfälle anfallen, die zu Unterbrechungen der Abfuhr der (gewünschten) Zelluloseformkörper führt. Die Formkörperabfälle (der ungewünschten Form) werden üblicherweise gesammelt, z.B. in einem Behälter wie einem Korb, dann zerkleinert, z.B. in einem Zerkleinerer. Lösungsmittel kann dann aus den zerkleinerten Formkörperabfällen extrahiert werden. Das Extrahieren kann durch Auswaschen oder mechanisches Quetschen oder Kneten, vorzugsweise durch Kombination von Auswaschen mit Quetschen oder Kneten, der zerkleinerten Formkörperabfälle erfolgen. Quetschen oder Kneten kann beispielsweise in einer Schnecke vorgenommen werden, welche auch die Formkörperabfälle zugleich zerkleinern kann.

Für diese Schritte liefert die Erfindung auch eine Vorrichtung zur Regeneration eines Lösungsmittels von Zellulose bei einem Verfahren zur Herstellung von Zelluloseformkörper. Diese kann eine Spinnmasseherstellungsanlage, Spinnmassefiltrationanlage, Spinnanlage mit einem Extruder, Extrusionspumpen, Wärmetauscher, Extrusionswerkzeuge, Spinndüsen, einen Behälter für Koagulationsflüssigkeit, welche nach einem Spalt unter dem Extruder Extrusionsmitteln, vorzugsweise Spinndüsen, angeordnet ist, eine Abzugsvorrichtung, einer Schneidvorrichtung, ein Feststoffsammelbehälter für verfestigte Zelluloseformkörper, einen Zerkleinerer für verfestigte Zelluloseformkörper, eine mechanische Trennanlage zur Trennung von Feststoffen in Flüssigkeiten, eine Anlage zum Ionenaustausch, eine Anlage zum Aufkonzentrieren des wässrigen Zelluloselösungsmittels oder Kombinationen davon umfassen. Vorzugsweise umfasst die Vorrichtung eine Spinnanlage mit einem Extruder, einem Behälter für Koagulationsflüssigkeit, welche nach einem Spalt unter dem Extruder angeordnet ist und eine Abzugsvorrichtung für verfestigte Zelluloseformkörper aus dem Behälter. Diese Vorrichtungteile werden im Folgenden weiter erläutert.

Vorzugsweise wird ein Feststoffsammelbehälter für verfestigte Zelluloseformkörper und ein Zerkleinerer zum Zerkleinern von verfestigten Zelluloseformkörpern vorgesehen. Die Vorrichtung kann weiters einen Extraktor zum Extrahieren des Lösungsmittels aus den Formkörperabfällen aufweisen. Ebenso kann eine Waschanlage für Formkörper (auch für Abfälle, aber insbesondere für gewünschte Formkörper) vorgesehen werden.

Die zur Extraktion vorgesehenen Zelluloselösungen werden üblicherweise zunächst aus einer Suspension in einem Mischer hergestellt, z.B. wie in WO 2009/098073 A1, WO 2011/124387 A1 oder US 5,948,905 beschrieben. Üblicherweise wird Zellulose aus Holz oder Zellstoff gewonnen, aber auch andere Quellen sind möglich. Die Zellulose wird zerkleinert und anschließend mit einem Lösungsmittel und Wasser vermischt. Im Anschluss an die kontinuierliche Suspensionsherstellung wird unter Vakuum und erhöhter Temperatur ein Teil des Wassers aus der Suspension entfernt. Sobald der Wassergehalt ausreichend gesunken ist, löst sich die Zellulose durch das Lösungsmittel auf und bildet eine für den Formgebungsprozess geeignete Lösung (auch Spinnlösung oder Extrusionslösung genannt), welche filtriert und anschließend geformt wird, z.B. in der Faserherstellung, durch den Extruder (z.B. Spinndüsen) gepresst wird. Die so geformten Formkörper werden in einem Bad mit Koagulationsflüssigkeit (üblicherweise Wasser, oder Wasser mit Lösungsmittel unter der zur Lösung erforderlichen Konzentration) ausgefällt. Erfindungsgemäß wird vorzugsweise underivatisierte Zellulose verwendet (Lyocell), also keine Viskose. Auch in der Extrusionslösungsherstellung kann es bereits zur Bildung von Abfällen kommen, welche sich z.B. in Filtern ansammeln. Ein Filter ist beispielsweise in WO 2014/085836 A1 beschrieben. Derartige Abfälle können fest (Zellulosesuspension oder verfestigte Lösung) oder flüssig (Zelluloselösung, z.B. bei Spülströmen im Filter) sein.

Das Lösungsmittel (auch "Lösungsvermittler" oder "Zellulose-Lösungsmittel") ist ein Mittel um Zellulose zu lösen. Üblicherweise werden hierbei hohe Temperaturen eingesetzt z.B. 70°C oder mehr, insbesondere 75°C oder mehr oder 78°C oder mehr. Meist wird es mit einem Nicht-Lösungsmittel, also einer Substanz, die Zellulose nicht auflösen kann, gemischt, wobei die Mischung weiterhin zum Auflösen von Zellulose geeignet ist. Hierbei werden u.a. hohe Anteile des Lösungsmittels in der Mischung notwendig, z.B. 60% (Masse-%) oder mehr - je nach Lösungsmittel kann dies unterschiedlich sein und der Anteil leicht in Lösungsversuchen von einem Fachmann festgestellt werden.

Als Zelluloselösung im erfindungsgemäßen Verfahren kommt ein Extrusionsmedium für den Formungsprozess zum Einsatz. Die Zellulosekonzentration wird in für Lyocellverfahren üblichen Größen gewählt. So kann die Zellulosekonzentration in der Zelluloselösung (zur Verfügung gestellt in Schritt i) 4% bis 23%, vorzugsweise 6% bis 20%, insbesondere 8% bis 18% oder 10% bis 16%, sein (alle %-Angaben in Masse-%).

Vorzugsweise ist das Lösungsmittel ein tertiäres Aminoxid (Amin-N-oxid), insbesondere bevorzugt N-Methylmorpholin-N-oxid. Es kann alternativ oder zusätzlich ein ionisches Lösungsmittel sein. Derartige ionische Lösungsmittel sind beispielsweise in WO 03/029329; WO 2006/000197 A1; Parviainen et al., RSC Adv., 2015, 5, 69728-69737; Liu et al., Green Chem. 2017, DOI: 10.1039/c7gc02880f; Hauru et al., Zellulose (2014) 21:4471-4481; Fernändez et al. J Membra Sci Technol 2011, S:4; etc. beschrieben und enthalten vorzugsweise organische Kationen, wie z.B. Ammonium-, Pyrimidium- oder Imidazoliumkationen, vorzugsweise 1,3-Dialkyl-imidazolium Salze, wie Halogenide. Wasser wird auch hier vorzugsweise als Nicht-Lösungsmittel von Zellulose verwendet. Besonders bevorzugt ist eine Lösung von Zellulose und Butyl-3-methyl-imidazolium (BMIM), z.B. mit Chlorid als Gegenion (BMIMCl), oder 1-Ethyl-3-methyl-imidazolium (auch vorzugsweise als Chlorid, Acetat oder Diethylphosphat) oder 1-hexyl-3-methylimidazolium oder 1-hexyl-1-methylpyrrolidinium (vorzugsweise mit einem bis(trifluoromethylsulfonyl)amid Anion), und Wasser. Weitere ionische Lösungsmittel sind 1,5-Diazabicyclo[4.3.0]non-5-enium, vorzugsweise als Acetat; 1-Ethyl-3-methylimidazoliumacetat, 1,3-Dimethylimidazolium-acetat, 1-Ethyl-3-methylirnidazolium-chlorid, 1-Butyl3-methylimidazolium-acetat, 1-Ethyl-3-methylimidazolium-diethylphosphat, 1-Methyl-3-methylimidazolium-dimethylphosphat, 1-Ethyl-3-methylimidazolium-formiat, 1-Ethyl-3-methylimidazolium-octanoat, 1,3-Diethylimidazolium-acetat und 1-Ethyl-3-methylimidazolium-propionat.

Flüssigkeiten oder Feststoffe mit Lösungsmittel fallen in diversen Stadien des Lyocellverfahrens (od. dgl.) an. Aus diesen soll das Lösungsmittel gesammelt, extrahiert und/oder regeneriert werden, damit es dem Lyocellverfahren wieder als Mittel zum Auflösen von Zellulose dienen kann. Dazu muss das Lösungsmittel nicht als Reinstoff erhalten werden. Eine Mischung aus Lösungsmittel und Nichtlösungsmittel, die geeignet ist, Zellulose zu lösen, ist ausreichend. Ein derartiges Aufkonzentrierten des Lösungsmittels kann auch als Teil des Regenerierens des Lösungsmittels angesehen werden. Ziel ist es das Lösungsmittel möglichst vollständig im Verfahren zu belassen, und Verluste zu verhindern. Insbesondere ein Ziel ist es, über 99%, insbesondere über 99,5%, (alle Masse-%) Lösungsmittel im Prozess zu halten.

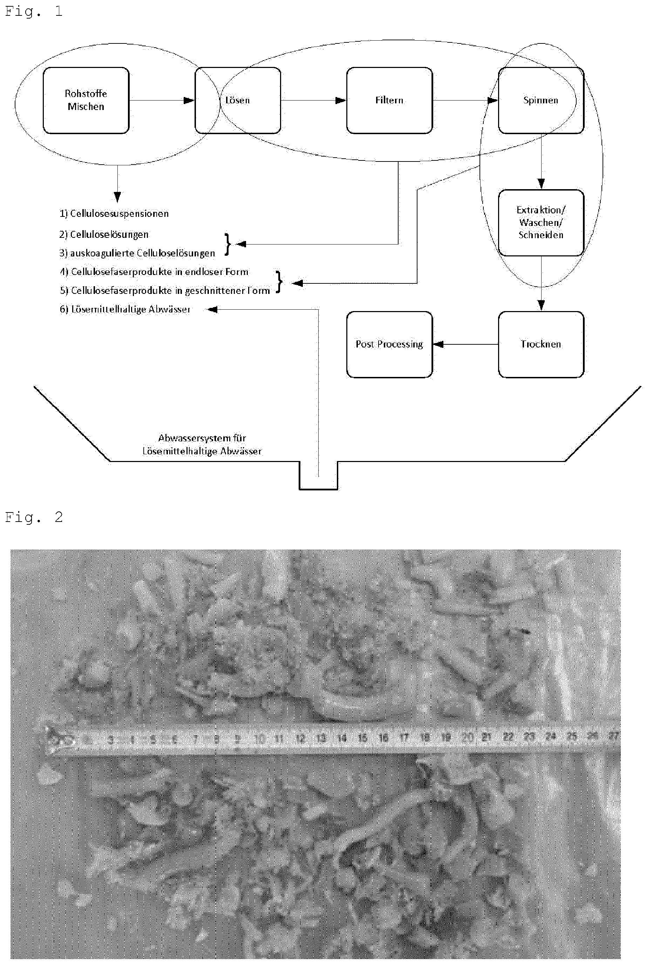

Lösungsmittelhaltige Stoffe sind insbesondere (vgl. Fig. 1):

(1) Zellulosesuspensionen, z.B. aus Resten der Zelluloselösungsherstellung,
(2) Zelluloselösungen, z.B. aus Filtern,
(3) auskoagulierte Zelluloselösungen, z.B. Formkörperabfälle in unerwünschter Form, welche insbesondere beim Starten des Verfahrens anfallen,
(4) Zelluloseformkörper in endloser Form, z.B. nach dem Formen, welche gewaschen werden, um Lösungsmittel hieraus zu extrahieren,
(5) Zelluloseformkörper in geschnittener Form, z.B. nach dem Formen und Schneiden, welche gewaschen werden um Lösungsmittel hieraus zu extrahieren,
(6) lösemittelhaltige Abwässer, welche in diversen Stadien anfallen, z.B. als Koagulationsflüssigkeit, welche mit den Formkörpern aus dem Koagulationsflüssigkeitsbehälter ausgetragen werden, Spritzflüssigkeiten, Waschflüssigkeiten (beim Waschen der gewünschten Formkörper), Extraktionsflüssigkeiten der Behandlung der festen Abfälle. Derartige Verluste entstehen beispielsweise durch ein Abtropfen von den Formkörpern. Um dies zu Verhindern oder Minimieren, kann eine Auffangwanne zum Sammeln dieser Verluste vorgesehen werden. Dies kann auch in der Form eines vom Nicht-Lösemittelhaltigen Abwasser getrennten Kanalnetzes ausgeführt werden, sowohl limitiert für den Bereich des Auswaschens, als auch für den gesamten Verfahrensbereich ausgeführt, in dem Lösemittel eingesetzt wird.

Alle in (1) bis (5) beschriebenen Zelluloseformkörper können sowohl in gewünschter Form (z.B. als regulärer Formkörper bei einer Faserproduktion) als auch in ungewünschter Form (z.B. als Abfallmaterial) vorkommen. Die Unterscheidung zwischen Produkt und Abfall kann dabei willkürlich getroffen werden, je nach Qualitätskriterien für die gewünschten Produkte (verfahrensstörende Verklumpungen werden in der Regel immer als Abfall angesehen) oder nach Verfahrensökonomie (Verschnitt). Das erfindungsgemäße Verfahren zeichnet sich vorzugsweise durch folgende Merkmale aus:

Vorzugsweise werden die Feststoffabfälle aus (1) Zellulosesuspensionen, (2) Zelluloselösungen, (3) auskoagulierten Zelluloselösungen, z.B. Formkörperabfälle in unerwünschter Form, (4) Zelluloseformkörper in endloser Form - sofern als Abfall vorhanden -, (5) Zelluloseformkörper in geschnittener Form - sofern als Abfall vorhanden -, mit dem Ziel der gemeinsamen Weiterverarbeitung gesammelt. Sofern von (4) und (5) keine Feststoffe verworfen werden, kann die Extraktions- und/oder Waschflüssigkeit aus ihrer Behandlung gesammelt werden.

Gegebenenfalls kann die Klebrigkeit, z.B. der Zellulosesuspensionen (1), durch Behandlung mit Nicht-Lösungsmittel, z.B. Wasser, vor der weiteren Verarbeitung (insb. Zerkleinerung) reduziert werden.

Feste Abfälle können durch deren Verarbeitung zu flüssigen Abfällen führen und die Verarbeitung flüssiger Abfälle kann zu festen Abfällen führen. So wird aus festen Abfällen Lösungsmittel ausgewaschen, extrahiert oder ausgelaugt. Die dabei anfallenden lösungsmittelhaltigen Flüssigkeiten (Wasch- oder Extraktionsflüssigkeiten) werden der Regeneration aus flüssigen Abfällen zugeführt. Flüssige Abfälle mit ausreichend hoher Zellulosemenge können ausgefällt werden (z.B. aus (2), z.B. wie in CN104711706 beschrieben) und somit zu lösungsmittelhaltigen festen Abfällen führen, welche wiederum der erfindungsmäßigen Feststoffaufbereitung zugeführt werden, um daraus Lösungsmittel auszuwaschen oder zu extrahieren (was wiederum zu flüssigen Abfällen führt). Erst wenn ausreichend, nahezu komplett Lösungsmittel aus Feststoffen entfernt wurde, können diese entsorgt werden. Gleiches gilt für Flüssigkeiten oder Fluide ohne Lösungsmittel (z.B. Wasserdampf beim Abdampfen zur Anreicherung von Lösungsmittel in der verbleibenden Flüssigkeit), welche entsorgt oder anderweitig im Lyocellprozess verwendet werden können.

Die festen lösungsmittelhaltigen Abfälle können diverse Formen haben. Fallen sie aus den Zellulosesuspensionen oder Lösungen vor dem Formen an (z.B. in einem Filter), so kann Zellulose aus diesen Medien abgeschieden werden (durch Mischen mit Nichtlösungsmittel und/oder Abkühlen). Dies führt meist zu feinen faserigen Abfällen. Beim Formen können Verklumpungen auftreten, insbesondere beim Starten oder Anfahren des kontinuierlichen Extrusionsvorgangs. Vorzugsweise ist das Formen der Zelluloselösung in eine gewünschte geometrische Form ein Spinnen zu Fäden oder Filamenten. Dabei können die Formkörperabfälle in ungewünschter Form Verklumpungen der Fäden oder Filamente sein.

Weitere feste Abfälle sind Schnittabfälle der Formkörper, auch wenn diese zunächst in gewünschter Form geformt wurden.

Erfindungsgemäß können diverse Formkörperabfälle aus diesen unterschiedlichen Verfahrensabschnitten gemischt werden. Vorzugsweise werden feste lösungsmittelhaltige Abfälle aus auskoagulierten Zelluloselösungen oder -suspensionen vor dem Formen mit Formkörperabfällen nach dem Formen, z.B. die Verklumpungen oder auch Formkörper in gewünschter Form, gemischt. Das Mischen bewirkt, dass die Effizienz der Zerkleinerung gesteigert wird, also die zur Zerkleinerung vorgesehenen festen Abfälle leichter verarbeitet und somit schneller die gewünschte zerkleinerte Größe erreichen bzw. es zu weniger Störungen oder Verklumpungen im Zerkleinerer kommt. Insbesondere Formkörper in gewünschter Form, wie Zellulosefasern, sind oft schwer zu zerkleinern. Die Konzentration dieser Anteile wird durch Mischen mit anderen festen Abfällen erniedrigt, wodurch der Zerkleinerer leichter mit den gemischten Abfällen umgehen kann. Mischverhältnisse von zwei Teilen Zelluloseformkörper-Abfällen (nach dem Formen, vorzugsweise mit Abfällen in gewünschter Form) zu einem Teil oder mehr Teilen fester Abfälle vor dem Formen, d.h. die vor dem Formen anfallen (aus Zellulosesuspensionen oder Zelluloselösungen), zeigen einen positiven Effekt durch effizientere Zerkleinerung. Mischungen von einem Teil Zelluloseformkörper-Abfällen zu zwei Teilen oder mehr festen Abfällen, die vor dem Formen anfallen, ist besonders bevorzugt und hat sich als besonders effizient erwiesen. Die gesammelten Feststoffabfälle werden mit einem Zerkleinerungsapparat behandelt, um die Korngröße zu verringern. Dabei können die gesammelten Feststoffabfälle separat behandelt werden (z.B. nach Trennung oder Siebung) oder die gesammelten Feststoffabfälle können in Kombination behandelt werden. Dabei können die in Kombination behandelten Feststoffabfälle gezielt in Mischung behandelt werden oder die in Kombination behandelten Feststoffabfälle können gezielt in Folge behandelt werden.

Die Zerkleinerung kann einstufig oder mehrstufig (mittels Vorzerkleinerer und/oder Nachzerkleinerer) durchgeführt werden.

Vorzugsweise erfolgt Zerkleinern in Schritt C) mit einer Schneidmühle. Erfindungsgemäß hat sich gezeigt, dass eine Mühle mit einem Schneidelement besonders geeignet ist, die Formkörperabfälle und auch andere feste lösungsmittelhaltige Abfälle zu zerkleinern, ohne dabei so viel Reibenergie einzubringen, dass sich das feste Medium signifikant erwärmt. Gleichzeitig ist die punktuelle mechanische Krafteinwirkung durch das Schneidelement hoch genug um auch zähe und faserige Abfälle effektiv zu zerkleinern.

Vorzugsweise wirkt das Schneidelement gegen ein Gegenstück, wie ein Stator oder ein weiteres Schneidelement, sodass die Abfälle zwischen den Elementen geschnitten werden. Bevorzugt ist eine schneidende Zerkleinerung. Besonders bevorzugt hat die Schneidmühle einen Rotor mit hervorstehenden Schneidelementen, sowie ein Sieb mit Öffnungen, wobei die Schneidelemente in die Sieböffnungen eingreifen. Das Sieb wirkt als Gegenstück mit Gegenkanten und durch das Eindringen der Schneidelemente in die Öffnungen wird dazwischen befindlicher fester Abfall zerkleinert und ggf. durch die Öffnungen gedrückt. Die Öffnungen können einem Stator oder alternativ in einer weiteren Rotorwelle sein. Andere Siebe können verwendet werden, um die Korngröße des zerkleinernden Materials zu steuern. Z.B. kann ein Sieb den Abtransport von Material steuern. Nur Material, das durch Sieböffnungen passt, wird abtransportiert; größeres Material bleibt im Einflussbereich der Schneidelemente und wird weiter zerkleinert. Erfindungsgemäß hat sich gezeigt, dass durch ein derartiges Sieb eine besonders effiziente Zerkleinerung der zellulosischen Abfälle aus dem Lyocellverfahren möglich ist.

Speziell bevorzugt ist ein Zerkleinerer mit einem Rotor mit hervorstehenden ein oder mehreren Schneidelementen, und eine oder mehrere Gegenkante(n), wobei die Schneidelemente an den Gegenkanten vorbeigleiten, sodass zwischen den Schneidelementen und den Gegenkanten befindliche Formkörper oder Formkörperabfälle zerkleinert werden. Vorzugsweise sind die Schneidkanten und/oder die Gegenkante gezahnt. Die Zahnspitze wird vorzugsweise durch Kanten in einem Winkel von 160° bis 30° gebildet. Vorzugsweise wird ein Sieb nahe und/oder unterhalb des Rotors vorgesehen, um die Größe des geschnittenen Materials zu steuern. Weiters bevorzugt ist, wenn der Rotor mit hervorstehenden Reib- oder ein oder mehreren Schneidelementen aufweist, und eine oder mehrere Gegenkante(n), wobei die Schneidelemente an den Gegenkanten vorbeigleiten, sodass zwischen den Schneidelementen und den Gegenkanten befindliche Formkörper oder Formkörperabfälle zerkleinert werden. Die Formkörper oder Formkörperabfälle können der Zerkleinerung mittels einer Nachdrückeinrichtung kontinuierlich oder diskontinuierlich den Schneidelementen zugeführt werden. Insbesondere bevorzugt sind die Schneidelemente dreieckförmig oder zahnförmig. Weiters wird bevorzugt, dass die Reib- oder Schneidelemente zueinander versetzt am Rotor angebracht werden. Diese vorzugsweisen Elemente und insbesondere ihre Kombination führen zu einem äußerst geeigneten Verfahren. Ein derartiger Zerkleinerer ist beispielsweise der Schredder "Antares" der Firma Lindner Recyclingtech GmbH, der ursprünglich zur Holzzerkleinerung entwickelt wurde. Überraschenderweise ist er optimal zur Zerkleinerung der pastösen festen Abfälle aus dem Lyocellverfahren.

Vorzugsweise werden die Formkörper und andere feste Abfälle (auch die vor dem Formen) zu einer Größe (maximale Dimension der Partikel) von 20 mm oder weniger, vorzugsweise 15 mm oder weniger, zerkleinert. Beispielgrößen sind 10 mm bis 20 mm.

Gegebenenfalls kann ein Nachzerkleinerer verwendet werden, der die Formkörper und andere feste Abfälle zu einer Größe von 10 bis 15 mm oder weniger, vorzugsweise von 10 mm oder weniger, zerkleinert. Der Nachzerkleinerer kann abgesehen von der Größe der Zerkleinerung ähnlich oder gleich gestaltet sein wie die Vorstufe.

Vorzugsweise wird im Zerkleinerungsschritt dem Zerkleinerer Wasser oder wässriges Medium zugeführt. Hiermit kann eine Extraktion oder ein Herauslösen von Zellulose-Lösungsmittel aus den Formkörpern auch bereits im Zerkleinerer stattfinden.

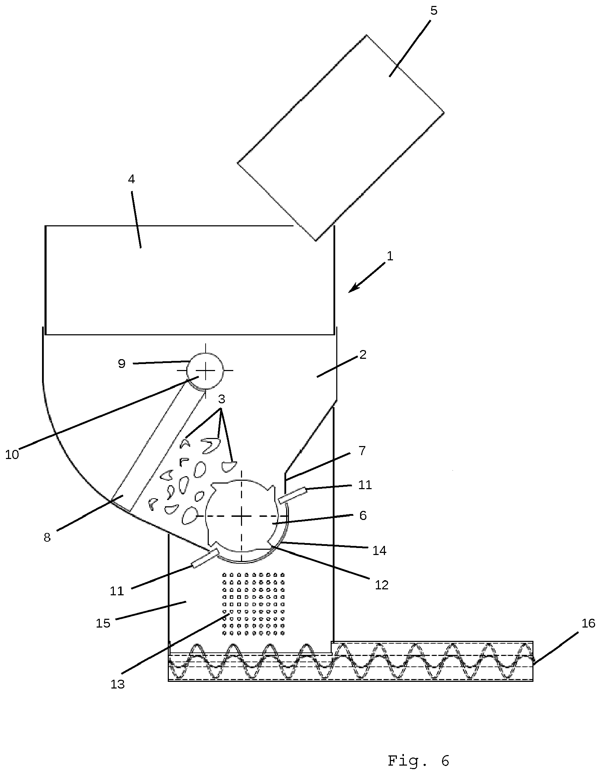

Weitere vorzugsweise Merkmale des Zerkleinerers sind unten in Teil (b) "Zerkleinerung der Abfallstoffe", insbesondere unter Verweis auf Fig. 6-9, erläutert. Die zerkleinerten Feststoffe werden direkt in einen Extraktionsbehälter (z.B. Becken) eingeführt. Alternativ können die zerkleinerten Feststoffe temporär zwischengelagert werden. Vorzugsweise werden alle zerkleinerten Feststoffe, ohne Beachtung des ursprünglichen Anfallorts (1) bis (5), gemeinsam einem Extraktionsbehälter (z.B. Becken) zugeführt. Vorzugsweise findet die Extraktion beim Rühren, z.B. unter Einsatz eines Rührers, statt. Das Feststoff-Flüssig-Gemisch wird mit einer Pumpe zur Entwässerung geführt.

Die Entwässerung und Extraktion können in Kombination stufenweise eingesetzt werden. Dies kann durch je eine oder mehrere Extraktions- und Entwässerungsstufe vorgenommen werden. Vorzugsweise wird Wasser zur Extraktion verwendet. Vorzugsweise wird bei der Extraktion das nötige Nicht-Lösungsmittel, z.B. Wasser, im Gegenstrom zum Feststoff-Flüssig-Gemisch aus dem extrahiert werden soll, geleitet.

Vorzugsweise werden alle flüssigen Abfälle gesammelt, um im erfindungsgemäßen Verfahren weiter verarbeitet zu werden.

Lösungsmittelhaltige Flüssigkeit fällt in diversen Schritten an und kann kombiniert verarbeitet werden. Vorzugsweise wird Koagulationsflüssigkeit, welche von den Zelluloseformkörpern aus Schritt A) iii) nach Abtransport aus einem Behälter mit Koagulationsflüssigkeit abgetrennt wird, z.B. durch Abtropfen oder Abpressen von den Zelluloseformkörpern, zusammen mit extrahiertem Lösungsmittel aus Schritt D) gesammelt.

Die erfindungsgemäße Vorrichtung hat dazu einen Kanal (z.B. offene Rinne oder geschlossenes Rohr) am Boden zum Sammeln und Weiterleiten von aus der Spinnanlage ausgetretener Koagulationsflüssigkeit, welche in einen Flüssigkeitssammelbehälter oder einen Evaporator für Zellulose-Lösungsmittel-haltige Flüssigkeiten führt. Dieser Kanal ist vorzugsweise durch eine begehbare aber flüssigkeitsdurchlässige Abdeckung abgedeckt, damit der Kontakt von Bedienpersonal der Lyocellanlage mit der lösungsmittelhaltigen Flüssigkeit minimiert wird. Eine solche Abdeckung ist beispielsweise ein Gitter.

Gemäß dem erfindungsgemäßen Verfahren werden die flüssigen Abfälle so weiterverarbeitet, dass das darin enthaltene Lösemittel in seiner ursprünglichen - oder zumindest für das Lyocell-Verfahren ausreichender - Reinheit wiedergewonnen werden kann und somit dem Prozess wieder beigeführt werden kann. Vorzugsweise werden die flüssigen Abfälle in einem Gefäß gesammelt, um gemeinsam diesem Verfahren unterzogen zu werden. Das Ziel ist es, das Lösemittel möglichst vollständig dem Lyocell-Verfahren wieder zurückzuführen.

Als ersten Schritt können die flüssigen Abfälle filtriert werden, um feste Rückstände zu entfernen (US 2011/0226427 A1) und/oder einem Ionenaustausch zugeführt werden, um schädliche Ionen, z.B. Eisen oder Kupferionen, zu entfernen (siehe z.B. Han et al., Journal of Textile Research 29(6), 2008, 15-19). NMMO-Abbauprodukte wie NMM (N-Methylmorpholin) können durch Oxidation entfärbt werden bzw. zu NMMO regeneriert werden. Ein geeignetes Verfahren zur Oxidation ist in WO 2018/115443 A1 beschrieben.

Eine effiziente Aufbereitung lösungsmittelhaltiger Flüssigkeiten wird erfindungsgemäß durch kombinierte Weiterverarbeitung (z.B. Reinigung, insb. Anreicherung des Lösungsmittels) erzielt. Vorzugsweise erfolgt erfindungsgemäß ein Anreichern des Lösungsmittels der Lösungsmittel-haltigen Wachflüssigkeiten aus Schritt A) iv)) und der Lösungsmittelhaltigen Extraktionsflüssigkeiten aus Schritt D) - d.h. nach dem Waschen, Herauslösen bzw. Extrahieren. In der erfindungsgemäßen Vorrichtung können dazu Verdampfer, Mikro- oder Ultrafiltationsverfahren, Membran- Osmosetrennverfahren und/oder Kristallisationsapparate vorgesehen werden. Dabei können diese Verfahren auch in Kombination zueinander oder nacheinander eingesetzt werden. Das erfindungsgemäße Verfahren erlaubt dabei auch eine selektive Anwendung bei der definierte lösehaltige Abwasserströme durch ein Verfahren vorbehandelt werden und danach gesammelt einer weiteren Anreicherungsstufe zugeführt werden.

Vorzugsweise wird das extrahierte Lösungsmittel oder wässrige Lösungsmittelgemisch vor der Anreicherung einem mechanischen Trennverfahren unterzogen. Eine mechanische Trennung ermöglicht ein Abtrennen anderer Phasen, wie eine feste Phase. Ein derartiges Trennverfahren ist beispielsweise eine Filtration oder eine Adsorption.

Das mechanische Trennverfahren kann als statische und/oder dynamisch geführte Filtration durchgeführt werden. In einer statischen Filtration wird eine abzutrennende Phase (Retentat) statisch gehalten, z.B. in einem Filter oder an einem Adsorbens festgehalten oder immobilisiert. Bevorzugte statische Filtrationsverfahren sind (Über-)Druckfiltration, Vakuumfiltration, Oberflächenfiltration, Schichtenfiltration, insbesondere Tiefenfiltration, z.B. mit Kiesfilter.

Das mechanische Trennverfahren kann auch oder alternativ als dynamisch geführte Filtration durchgeführt werden. Eine dynamische Filtration hat zwei mobile Phasen, welche z.B. durch eine Membran getrennt sind. Ein Beispiel ist die Membranfiltration, vorzugsweise als Querstromfiltration oder Tangentialflussfiltration. Dabei sind beide mobilen Phasen üblicherweise Fluide, insbesondere Flüssigkeiten. Die Membrantechnologie zum Aufarbeiten von Lösungsmittel, insbesondere NNMO und/oder ionischen Flüssigkeiten, wird beispielsweise in "Recovery of ionic liquids from wastewater by nanofiltration" (Journal of Membrane Science and Technology 2011, Seite 4-8; DOI:10.4172/2155-9589.S4-001 und in EP 0 448 924 beschrieben (beide durch Bezugnahme hierin aufgenommen). Diese Technologie wird vorzugsweise erfindungsgemäß eingesetzt.

Vorzugsweise ist das Filtrationsverfahren, vorzugsweise als dynamische Filtration, eine Mikrofiltration, Ultrafiltration, Nanofiltration, oder Umkehrosmose. Übliche Porengrößen der Filter oder Membran dieser Filtrationsverfahren sind 0,5-0,1 $\mu$m bei Mikrofiltration, 0,1-0,01 $\mu$m bei Ultrafiltration, 0,01-0,001 $\mu$m bei Nanofiltration, 1-0,1 nm bei Umkehrosmose.

Abzutrennende Phasen können auch ohne Filtration abgetrennt werden, z.B. durch Absetzen oder Zentrifugation, insbesondere um Feststoffe zu entfernen. Daher wird vorzugsweise im erfindungsgemäßen Verfahren das herausgelöste oder extrahierte Lösungsmittel oder wässrige Lösungsmittelgemisch vor der Anreicherung einem Absetzbecken zugeführt. Ebenso ist bevorzugt, dass das herausgelöste oder extrahierte Lösungsmittel oder wässrige Lösungsmittelgemisch vor der Anreicherung einer Zentrifuge und/oder Separator zugeführt wird. Weiter kann das herausgelöste oder extrahierte Lösungsmittel oder wässrige Lösungsmittelgemisch vor der Anreicherung einer Filterpresse zugeführt werden. Weiters oder alternativ kann das herausgelöste oder extrahierte Lösungsmittel oder wässrige Lösungsmittelgemisch vor der Anreicherung einer Zentrifuge und/oder Separator zugeführt werden, um darin eine weitere Abtrennung von verunreinigenden Stoffen, wie Feststoffen, zu erreichen. Bevorzugst ist die Kombination eines Absetzbecken, einer Filterpresse, einer Zentrifuge und/oder einem Separator.

Besonders bevorzugt ist das Behandeln des herausgelösten oder extrahierten Lösungsmittels oder wässrigen Lösungsmittelgemisches vor der Anreicherung mit einem Mikrodrehfilter.

In allen Ausführungsformen kann der Extraktions- und/oder Filtrationsschritt diskontinuierlich und/oder kontinuierlich durchgeführt wird.

Danach wird vorzugsweise das Lösungsmittel oder wässrige Lösungsmittelgemisch einem Ionentausch z.B. mittels Ionenaustauscher unterzogen. Dazu kann beispielsweise nach dem (diskontinuierlich und/oder kontinuierlich durchgeführten) Extraktions- und/oder Filtrationsschritt das Lösungsmittel oder wässrige Lösungsmittelgemisch einem Kationen- und/oder Anionenaustauscher zugeführt werden.

Diese Anreicherungsschritte können vorgenommen werden, um eine Lösung des Zellulose-Lösungsmittels zu erhalten, die geeignet ist, Zellulose zu lösen oder zu suspendieren. Vorzugsweise wird eine Konzentration von mindestens 50% (Masse-%), speziell bevorzugt 50% oder mehr, oder 70% oder mehr, Lösungsmittel in der Lösung, insbesondere im Fall von N-Methylmorpholin-N-oxid als Lösungsmittel, erreicht. Das Lösen oder Suspendieren, für das die angereicherte Lösung geeignet sein soll, sind frühe Schritte im Lyocellverfahren - wie oben beschrieben. Kurz, mit einem Lösungsmittel-Nichtlösungsmittel-Gemisch wird Zellulose suspendiert und durch Entfernen von Nichtlösungsmittel in Lösung gebracht. Übliche Lösungsmittel Mengen in diesem Gemisch sind 50% oder mehr, z.B. 58% bis 78% (alle Masse-%). Zelluloselösungen können z.B. im Wesentlichen 5-16% Zellulose, 55-80% Lösungsmittel, insb. NMMO, und der Rest, vorzugsweise 18-30%, Nichtlösungsmittel, insb. Wasser, enthalten (alle Masse-%). Geringfügige Nebenbestandteile wie Salze werden hierbei nicht berücksichtigt.

Das Anreichern umfasst vorzugsweise ein Verdampfen von Nicht-Lösungsmittel, welches vorzugsweise Wasser ist. Das Verdampfen ist eine vorzugsweise Vorgehensweise bei Aminoxiden, insb. NMMO, als Lösungsmittel. Alternativ oder zusätzlich kann das Anreichern des Lösungsmittels Kristallisieren umfassen. Dies ist insbesondere bei ionischem Lösungsmittel bevorzugt. Die erfindungsgemäße Vorrichtung kann einen Anreicherer, insbesondere einen Evaporator zum Abdampfen von Nicht-Lösungsmittel aus Zellulose-Lösungsmittel-haltigen Flüssigkeiten (US 8,932,471; US 2011/0226427 A1) oder eine Kristallisationsanlage (Liu et al., s.o.) enthalten.

Die erfindungsgemäße Vorrichtung kann somit zur Herstellung von Zellulosesuspensionen in wässrigem Lösungsmittel und/oder zur Herstellung von Zelluloselösungen in wässrigem Lösungsmittel verwendet werden.

Weiters betrifft die Erfindung ein Zelluloseprodukt, welches mit einem erfindungsgemäßen Verfahren erhalten wurde, insbesondere durch Verwendung eines gereinigten, aufkonzentrierten wässrigen Lösungsmittels. Das Zelluloseprodukt wird durch Extrusion der Zelluloselösung (Formen, wie hierin beschrieben) erhalten.

Das Zelluloseprodukt ist vorzugsweise ein endlos Zellulosefilamentprodukt oder ein Zellulosestapelfaserprodukt oder ein Zellulosefilmprodukt. Vor oder nach dem Anreichern kann die lösungsmittelhaltige Flüssigkeit durch Ionenaustausch gereinigt werden. Dazu wird ein Kationen- und/oder Anionenaustauscher verwendet, insbesondere um Eisen- und Kupferionen aus der Flüssigkeit zu entfernen.

Lösungsmittelhaltige Flüssigkeit fällt in diversen Schritten an und kann kombiniert verarbeitet werden. Vorzugsweise wird Koagulationsflüssigkeit, welche von den Zelluloseformkörpern aus Schritt A) iii) nach Abtransport aus einem Behälter mit Koagulationsflüssigkeit abtropft oder abgepresst wird, zusammen mit extrahiertem Lösungsmittel aus Schritt D) gesammelt und/oder weiterverarbeitet - insb. zur Anreicherung. Die Koagulationsflüssigkeit ist während dem kontinuierlichen Verfahren in einem Behälter. Dem Behälter kann eine Auffangwanne zum Sammeln von durch den Abtransport von Zelluloseformkörpern aus dem Behälter anfallende abtropfende Zellulose-Lösungsmittel zugeordnet sein. Von diesem Behälter kann eine Leitung zu einem gemeinsamen Sammelbehälter führen. Im Lyocell-Verfahren wird eine Zelluloselösung z.B. durch Extrudieren oder Spinnen geformt und in die Koagulationsflüssigkeit eingebracht. Dabei kommt es zum Lösungsmittelaustausch zwischen der geformten Zelluloselösung und der Koagulationsflüssigkeit. Die dadurch geformten Formkörper werden wiederum aus der Koagulationsflüssigkeit ausgebracht, wobei diverse Verluste der Lösungsmittel-haltigen Koagulationsflüssigkeit auftreten können. Diese Verluste werden z.B. durch Sammeln von abtropfender Flüssigkeit vermieden. Beispielsweise kann nach dem Ausführen aus dem Behälter mit Koagulationsflüssigkeit ein Abzugswerk vorgesehen werden, in dem die Formkörper über eine oder mehrere Walzen umgeleitet und abgezogen werden. Abtropfende Lösungsmittelhaltige Flüssigkeit kann hier gesammelt werden.

Die Schritte A) i) bis iv) werden in einer oder mehreren Spinnanlage(n) durchgeführt. Eine Anlage hat je einen Extruder, der Zelluloselösung in separate oder gemeinsame Koagulationsflüssigkeitsbehälter leitet. Vorzugsweise werden mehrere Spinnanlagen kombiniert, z.B. wie in WO 02/12599 A1 gezeigt. Vorzugsweise wird die aus der Spinnanlage austretende Koagulationsflüssigkeit über einen Kanal gesammelt und zusammen mit dem Lösungsmittel aus Schritt D) vermengt und gemeinsam weiter verarbeitet, insb. bei der Anreicherung. Weiters bevorzugt ist, wenn aus der Spinnanlage austretende lösungsmittelbeinhaltende wässrige Koagulationsflüssigkeit über einen Kanal oder einem Kanalsystem gesammelt und zusammen mit dem Lösungsmittel oder wässrigen Lösungsmittelgemisch aus Schritt iv) vermengt, der Reinigung, der Aufkonzentrierung und Wiederverwendung zugeführt wird. Spritzverluste von Lösungsmittel aus einer Anlage können auf den Boden gelangen. Von dort wird lösungsmittelhaltige Flüssigkeit über einen Kanal gesammelt und weiter geleitet. Die erfindungsgemäße Vorrichtung hat dazu einen Kanal (z.B. offene Rinne oder geschlossenes Rohr) am Boden zum Sammeln und Weiterleiten von aus der Spinnanlage ausgetretener Koagulationsflüssigkeit, welche in einen Flüssigkeitssammelbehälter oder einen Evaporator für Zellulose-Lösungsmittel-haltige Flüssigkeiten führt. Dieser Kanal ist vorzugsweise durch eine begehbare aber flüssigkeitsdurchlässige Abdeckung abgedeckt, damit der Kontakt von Bedienpersonal der Lyocellanlage mit der lösungsmittelhaltigen Flüssigkeit minimiert wird. Eine solche Abdeckung ist beispielsweise ein Gitter.

Die vorliegende Erfindung wird weiters durch die nachstehenden besonderen Ausführungen erläutert.

Fig. 1 zeigt Anfall-Orte für lösungsmittelhaltige Abfälle im Lyocellverfahren. Der Lyocell-Vorgang ist grob in die Schritte Rohstoffmischen, Lösen der Zellulose, Filtern, Spinnen (od. allgemein Formen), Extraktion des Lösungsmittels/Waschen der Formkörper/Schneiden der Formkörper, Trocknen der Formkörper und weitere Verarbeitung (wie Aufrollen, Kräuseln etc.) unterteilt - entsprechend nach dem Verarbeitungsweg des Zelluloseausgangsmaterials (wie Zellstoff) bis zum fertigen Formkörper. Die einzelnen Abfälle in diesen Schritten sind markiert und aufgelistet. Unter dem Schema ist eine Wanne mit einem Kanal skizziert, welche die Sammlung der lösungsmittelhaltigen Abwässer umschreibt (insbesondere da erfindungsgemäß Auffangwannen und Sammelkanäle verwendet werden, um die Abwässer zu erfassen). Die lösungsmittelhaltigen Produkte und Abfälle sind daher: (1) Zellulosesuspensionen, (2) Zelluloselösungen, (3) auskoagulierte Zelluloselösungen, (4) Zelluloseformkörper in endloser Form, (5) Zelluloseformkörper in geschnittener Form, (6) lösemittelhaltige Abwässer.

(1) Zellulosesuspensionen

Zellulosesuspensionen sind Mischungen mit den Hauptkomponenten Zellulose, Wasser und ein Lösemittel, zum Beispiel N-Methylmorpholin N-Oxid (NMMNO). Weiteres werden in diese Suspension auch Stabilisatoren und andere prozesswichtige Substanzen zu dosiert. Zellulosesuspensionen entstehen als Abfallprodukt im Anlagenbereich des Rohstoff-Mischens sowie beim Löse-Vorgang. Mögliche Zellulosesuspensions-Zusammensetzungen sind in Tabelle 1 angeführt.

**Tabelle 1**: Beispiele für Zellulosesuspensionen mit verschiedenen Zusammensetzungen

|  | Konzentration Zellulose | Konzentration NMMNO | Konzentration Wasser |
|---|---|---|---|
| Symbol | c_Cell | c_NMMNO | c_H2O |
| Einheit | [wt.%] | [wt.%] | [wt.%] |
| Buchstabe | a | b | c |
| **Beispiel Nr.** |  |  |  |
| 1 | 5,7 | 75,3 | 19,0 |
| 2 | 6,5 | 69,2 | 24,3 |
| 3 | 7,7 | 71,1 | 21,2 |
| 4 | 8,3 | 71,0 | 20,7 |
| 5 | 9,0 | 69,7 | 21,3 |
| 6 | 10,0 | 64,3 | 25,7 |
| 7 | 10,5 | 59,2 | 30,3 |
| 8 | 10,5 | 61,8 | 27,7 |
| 9 | 10,5 | 65,2 | 24,4 |
| 10 | 10,5 | 67,2 | 22,4 |
| 11 | 10,5 | 69,4 | 20,1 |
| 12 | 11,9 | 64,7 | 23,4 |
| 13 | 12,5 | 62,3 | 25,2 |
| 14 | 13,2 | 61,1 | 25,7 |
| 15 | 15,9 | 58,0 | 26,1 |

(2) Zelluloselösungen

Zellulose wird unter Entfernen von Wasser aus der Suspension und dadurch Aufkonzentrieren des Lösungsmittels in Lösung versetzt. Zelluloselösungen entstehen als Abfallprodukt im Anlagenbereich des Lösens, Filterns und der Formgebung (z.B. Spinnen). Mögliche Zelluloselösungs-Zusammensetzungen sind in Tabelle 2 angeführt.

**Tabelle 2**: Beispiele für Zelluloselösungen entstehend aus den angegebenen Zellulosesuspensionen.

|  | Konzentration Zellulose | Konzentration NMMNO | Konzentration Wasser |
|---|---|---|---|
| Symbol | c_Cell | c_NMMNO | c_H2O |
| Einheit | [wt.%] | [wt.%] | [wt.%] |
| Buchstabe | a | b | c |
| **Beispiel Nr.** |  |  |  |
| 1 | 6,1 | 80,2 | 13,7 |
| 2 | 7,5 | 79,9 | 12,6 |
| 3 | 8,5 | 78,8 | 12,7 |
| 4 | 9,3 | 79,2 | 11,5 |
| 5 | 10,2 | 78,7 | 11,1 |
| 6 | 12,0 | 77,1 | 10,9 |
| 7 | 13,4 | 75,7 | 10,9 |
| 8 | 12,9 | 76,4 | 10,7 |

(fortgesetzt)

| | Konzentration Zellulose | Konzentration NMMNO | Konzentration Wasser |
|---|---|---|---|
| Symbol | c_Cell | c_NMMNO | c_H2O |
| Einheit | [wt.%] | [wt.%] | [wt.%] |
| Buchstabe | a | b | c |
| **Beispiel Nr.** | | | |
| 9 | 12,5 | 78,0 | 9,5 |
| 10 | 12,2 | 78,1 | 9,7 |
| 11 | 11,8 | 78,2 | 10,0 |
| 12 | 14,1 | 76,5 | 9,4 |
| 13 | 15,1 | 75,4 | 9,5 |
| 14 | 16,1 | 74,8 | 9,1 |
| 15 | 19,7 | 71,9 | 8,4 |

<u>(3) Auskoagulierte Zelluloselösungen</u>

Unter Zufuhr von Wasser wird das, in der Zelluloselösung vorhandene, Lösungsmittel extrahiert und die Zellulose ausgefällt (Koagulation durch Einbringung der Zelluloselösung in die Koagulationsflüssigkeit). Neben dem Hauptprozess, wo dieser Effekt maßgeblich zur Formgebung der Zelluloseprodukte ist, wird dies auch angewendet, um verschiedene Abfallprodukte mit Wasser zu binden oder deren Klebrigkeit zu reduzieren. Je nach Anfallort und Ausgangslösung werden so auskoagulierte Zelluloselösungen mit verschiedensten Zusammensetzungen erhalten. Auskoagulierte Zelluloselösungen entstehen bei der Verarbeitung des Abfallproduktes (2) Zelluloselösungen im Anlagenbereich des Lösens, Filterns und der Formgebung (z.B. Spinnen). Mögliche Zusammensetzungen von auskoagulierten Zelluloselösungen sind in Tabelle 3 angeführt.

**Tabelle 3**: Beispiele für in Wasser auskoagulierte Zelluloselösungen

| | Konzentration Zellulose | Konzentration NMMNO | Konzentration Wasser |
|---|---|---|---|
| Symbol | c_Cell | c_NMMNO | c_H2O |
| Einheit | [wt.%] | [wt.%] | [wt.%] |
| Buchstabe | a | b | c |
| **Beispiel Nr.** | | | |
| 1 | 6,7 | 62,1 | 31,2 |
| 2 | 7,9 | 51,2 | 40,9 |
| 3 | 14,2 | 57,3 | 28,5 |
| 4 | 22,5 | 32,9 | 44,6 |
| 5 | 6,2 | 75,3 | 18,5 |
| 6 | 12,3 | 70,0 | 17,7 |
| 7 | 12,5 | 74,3 | 13,2 |
| 8 | 16,7 | 63,8 | 19,5 |
| 9 | 13,9 | 64,8 | 21,3 |
| 10 | 11,6 | 55,7 | 32,7 |
| 11 | 24,8 | 40,3 | 34,9 |
| 12 | 28,7 | 16,2 | 55,1 |

(fortgesetzt)

| | Konzentration Zellulose | Konzentration NMMNO | Konzentration Wasser |
|---|---|---|---|
| Symbol | c_Cell | c_NMMNO | c_H2O |
| Einheit | [wt.%] | [wt.%] | [wt.%] |
| Buchstabe | a | b | c |
| **Beispiel Nr.** | | | |
| 13 | 22,4 | 29,4 | 48,2 |
| 14 | 17,3 | 15,8 | 66,9 |
| 15 | 16,4 | 19,0 | 64,6 |

(4) Zellulosefaserprodukte in endloser Form

Zellulosefaserprodukte (oder allgemein Formkörper) in endloser Form werden im Lyocell-Prozess als Zwischenprodukt, aber auch als Endprodukt hergestellt.
Abfallprodukte in dieser Form entstehen im Anlagenbereich des Extrudierens (Spinnens), sowie bei der nachfolgenden Lösungsmittel-Extraktion, Wäsche und Produktverarbeitung (z.B. Schneiden). Mögliche Zusammensetzungen von Zellulosefaserprodukten sowohl in endloser als auch in geschnittener Form sind in Tabelle 4 angeführt.

(5) Zellulosefaserprodukte (Formkörper) in geschnittener Form

Zelluloseformkörper in geschnittener Form werden durch den Prozessschritt der Produktverarbeitung (z.B. Schneiden) aus endlosen Zelluloseformkörpern (4) hergestellt. Die möglichen Stoffzusammensetzungen stimmen mit Zellulosefaserprodukten in endloser Form überein und sind in Tabelle 4 angeführt.
Nach dem Extrahieren des Lösungsmittels darf im Regelprodukt kein potentiell rückgewinnbarer Lösungsmittelanteil im Zellulosefaserprodukt verbleiben. Feststoffabfälle ohne Lösungsmittel können entsorgt werden. Sollte noch Lösungsmittel in Abfällen nach der Extraktion vorhanden sein, z.B. im Ausnahme- oder Störfall, können diese gemeinsam mit den anderen lösungsmittelhaltigen Feststoffabfällen verarbeitet werden.

**Tabelle 4**: Beispiele für Zellulosefaserprodukte in verschiedenen Stadien des Prozesses. Diese gelten sowohl für endlose als auch für geschnittene Zellulosefaserprodukte.

| | Konzentration Zellulose | Konzentration NMMNO | Konzentration Wasser |
|---|---|---|---|
| Symbol | c_Cell | c_NMMNO | c_H2O |
| Einheit | [wt.%] | [wt.%] | [wt.%] |
| Buchstabe | a | b | c |
| **Beispiel Nr.** | | | |
| 1 | 15,4 | 43,0 | 41,6 |
| 2 | 17,3 | 27,9 | 54,8 |
| 3 | 19,4 | 22,4 | 58,2 |
| 4 | 22,1 | 14,3 | 63,6 |
| 5 | 20,4 | 10,9 | 68,7 |
| 6 | 21,4 | 5,4 | 73,2 |
| 7 | 21,8 | 2,1 | 76,1 |
| 8 | 26,3 | 1,2 | 72,5 |
| 9 | 28,0 | <1 | 72,0 |
| 10 | 38,4 | <1 | 61,6 |
| 11 | 43,8 | <1 | 56,2 |

(fortgesetzt)

| | Konzentration Zellulose | Konzentration NMMNO | Konzentration Wasser |
|---|---|---|---|
| Symbol | c_Cell | c_NMMNO | c_H2O |
| Einheit | [wt.%] | [wt.%] | [wt.%] |
| Buchstabe | a | b | c |
| **Beispiel Nr.** | | | |
| 12 | 53,7 | <1 | 46,3 |
| 13 | 56,9 | <1 | 43,1 |
| 14 | 53,4 | 3,0 | 43,6 |
| 15 | 42,6 | 9,7 | 47,7 |

(6) Lösemittelhaltige Abwässer

Lösemittelhaltige Abwässer können gewollt oder ungewollt in verschiedensten Anlagebereichen im Lyocell-Prozess auftreten. Die gezielte Sammlung und Wiederverwertung dieser Abwässer ist ein wesentlicher Bestandteil des Lösemittelkreislaufes und wird konsequent durchgeführt, um eine hohe Rückgewinnungsrate des Lösemittels zu gewährleisten.

Deshalb werden in Anlagenbereichen des Lyocell-Prozesses, wo lösemittelhaltige Abwässer auftreten können, spezielle Anforderungen an das Abwasser- und Kanalnetz gestellt, um diese Abwässer gezielt zu sammeln. Betroffene Anlagenbereiche sind flüssigkeitsdicht gestaltet, zum Beispiel durch dichten und beständigen Beton, oder spezielle Bodenbeschichtungen.

Die Hauptquellen der lösemittelhaltigen Abwässer sind Rückspül- und Regenerationsvorgänge von Filter- und Reinigungsschritten der Zelluloselösung und des Lösemittels im Prozess. Weitere Quellen sind Reinigungsvorgänge in der Produktionsanlage und das entstehende lösemittelhaltige Abwasser bei der Rückgewinnung des Lösemittels aus Feststoffabfällen.

Verschiedene mögliche Zusammensetzungen für Teilströme der lösemittelhaltigen Abwässer werden in Tabelle 5 dargestellt.

Tabelle 5: Beispiele für lösemittelhaltige Abwässer mit oder ohne Feststoffbeladung. Der Feststoff besteht im Regelfall aus Zellulose, dies ist aber besonders bei Abwässern entstehend durch die Reinigung von Anlagenkomponenten nicht zwingend der Fall.

| | Konzentration Feststoff | Konzentration NMMNO | Konzentration Wasser |
|---|---|---|---|
| Symbol | c_Solids | c_NMMNO | c_H2O |
| Einheit | [wt.%] | [wt.%] | [wt.%] |
| Buchstabe | a | b | c |
| **Beispiel Nr.** | | | |
| 1 | 0,0 | 83,4 | 16,6 |
| 2 | 0,0 | 53,4 | 46,6 |
| 3 | 0,0 | 45,7 | 54,3 |
| 4 | 0,0 | 24,6 | 75,4 |
| 5 | <1 | 26,7 | 73,3 |
| 6 | <1 | 22,4 | 77,6 |
| 7 | <1 | 14,3 | 85,7 |
| 8 | 0,0 | 12,4 | 87,6 |
| 9 | <1 | 10,2 | 89,8 |
| 10 | 0,0 | 3,4 | 96,6 |

(fortgesetzt)

|  | Konzentration Feststoff | Konzentration NMMNO | Konzentration Wasser |
|---|---|---|---|
| Symbol | c_Solids | c_NMMNO | c_H2O |
| Einheit | [wt.%] | [wt.%] | [wt.%] |
| Buchstabe | a | b | c |
| **Beispiel Nr.** | | | |
| 11 | 0,0 | 1,5 | 98,5 |
| 12 | 3,4 | 10,5 | 89,5 |
| 13 | 6,7 | 12,4 | 87,6 |
| 14 | <1 | <1 | 99,0 |
| 15 | 0,0 | <1 | 100,0 |

Gemäß der Erfindung wird bei Rückführung des Lösungsmittels in das Lyocellverfahren der Wirkungsgrad durch Verwertung und Aufarbeitung verschiedenartiger lösungsmittelhaltiger Rest- und Abfallstoffe und Abwässer verbessert.

Erfindungsgemäß wird ein Verfahren offenbart, das zur Aufbereitung von Abfall- oder Reststoffen sowie Reststoffgemengen und Abwässern folgende Schritte vorsieht:

(a) Sammlung der festen lösungsmittelhaltigen Abfallstoffe (z.B. oben wie unter (1) bis (5) genannt). Diese Abfallstoffe können separat oder nach Zusammenführung mehrerer oder aller Abfallstoffe (1) bis (5) weiter verarbeitet werden.
(b) Zerkleinern der in (a) genannten Abfallstoffe. Sofern in diesem Schritt Wasser verwendet wird, so kann bereits hier ein Teil oder das gesamte Lösungsmittel extrahiert werden und diese Extraktionsflüssigkeit der Lösungsmittelaufbereitung zugeführt werden. Diese Abfallstoffe (1) bis (5) können separat oder gemeinsam zerkleinert werden.
(c) Extrahieren des Zelluloselösungsmittels aus den in (b) zerkleinerten Abfallstoffen oder Stoffgemengen, vorzugsweise in einem gemeinsamen, für alle festen Abfallstoffe (1) bis (5) identisch einsetzbaren Verfahren.
(d) Entwässerung der in (c) extrahierten Rest-Feststoffe, mit optionaler anschließender Spülung und Reinigung dieser. Verfahrensschritte (c) und (d) können dabei beliebig oft wiederholt werden, bis der gewünschte Rest-Lösungsmittelgehalt im Rest-Feststoff erreicht ist. Dieser Feststoff wird hier abschließend als Abfallprodukt aus dem Verfahren abgeschieden.
(e) Sammlung und Reinigung aller lösemittelhaltigen Abwässer. Dies umfasst sowohl die in Verfahrensschritt (a) bis (d) erzeugten Abwässer als auch die in der gesamten Lyocell-Anlage gesammelten, lösemittelhaltigen Abwässer (6). Je nach Verschmutzungsgrad der Abwässer können diese vor der Sammlung getrennt in einem oder mehreren Filtern von Feststoffverschmutzungen befreit werden. Vorzugsweise wird das gesamte gesammelte lösemittelhaltige Abwasser gemeinsam in einer oder mehreren Feinfiltrationsstufen gereinigt.
(f) Das in Verfahrensschritt (e) filtrierte Abwasser wird über einen Kationen- und Anionentauscher geführt, um ionische Verschmutzungen, die im Lyocell-Prozess störend wirken (wie Eisen- oder Kupferionen), zu entfernen.
(g) Das saubere lösungsmittelhaltige Abwasser aus Verfahrensschritt (f) wird einer Aufkonzentrierungsanlage zugeführt, wo die Lösungsmittelkonzentration wieder auf die im Lyocell-Prozess verwendbare Ursprungskonzentration erhöht wird.

Das erfindungsgemäße Verfahren trägt durch eine effektive Erhöhung der Lösungsmittel-Rückgewinnungsrate wesentlich zur Entlastung der Umwelt und zur Verbesserung der Wirtschaftlichkeit des Lyocellverfahrens bei.

(a) Sammlung der Abfallstoffe

Die unter (1) bis (5) genannten Abfälle treten wie in Figur 1 gezeigt an verschiedenen Orten auf und haben wie beschrieben unterschiedliche Eigenschaften. Um diese Abfallstoffe auf den nächsten Verfahrensschritt (b) vorzubereiten, können optional mehrere Verfahrensschritte angewendet werden:

- Erzeugen von auskoagulierten Zelluloselösungen (3) aus den Zelluloselösungen (2) durch Benetzung oder Abtauchen mit Nichtlösungsmittel, vorzugsweise Wasser. Dies vermindert die Klebrigkeit der Materialien und erlaubt einen einfacheren Transport.

- Kühlen der im Regelfall heiß auftretenden Abfallprodukte ((1), (2) und (3)) mit gekühltem Wasser. Dies hilft bei der Erstarrung der Medien und erlaubt eine einfachere Zerkleinerung.
- Grobtrennung anorganischer und organischer Reststoffe, falls sich anorganische oder metallische Fremdstoffe im Gemenge befinden.
- Portionierung der Abfallprodukte in einfach transportierbaren Behältnissen. Dies erlaubt eine einfache zeitliche Entkoppelung zwischen einer diskontinuierlichen Abfall-Produktion und einer kontinuierlichen Abfall-Verarbeitung. Weiters erlaubt diese Entkopplung eine systematische Wahl der Zerkleinerungs-Reihenfolge im nächsten Verfahrensschritt.
- Mischen der Zelluloseformkörper-Abfallprodukte, insb. Fasern ((4) und (5)) mit Lösungs-Abfallprodukten ((2) und (3)), entweder direkt im Rahmen der Sammlung, oder durch alternierenden Eintrag in den Zerkleinerungs-Verfahrensschritt (b) .

Das Ziel des Mischens ist, die Zerkleinerungswirkung des Zerkleinerungsapparates für schwer zerkleinerbare Komponenten, wie zum Beispiel Zellulosefaser-Abfallprodukte, zu steigern. Mischverhältnisse von zwei Teilen Zellulosefaser-Abfallprodukte ((4) und (5)) zu einem Teil oder mehr Lösungs-Abfallprodukten ((2) und (3)) zeigen bereits einen positiven Effekt durch effizientere Zerkleinerung. Mischungen von einem Teil Zellulosefaser-Abfallprodukte zu zwei Teilen oder mehr Lösungs-Abfallprodukten ist besonders bevorzugt.

Die Anfallmengen der unterschiedlichen Abfallprodukte (1) bis (5) sind stark vom Anlagentyp und erzeugten ZelluloseProdukt abhängig. Beispiele für eine mögliche Verteilung von Abfallprodukten in einem Zellulose-Stapelfaser-Prozess sind in **Tabelle 6** und **Tabelle 7** dargestellt.

Die Sammlung und Lagerung der Abfallstoffe findet in beliebigen Transportbehältnissen statt. Keine speziellen Anforderungen an die eingesetzten Geräte sind gegeben.

**Tabelle 6**: Tägliche Abfallmengen im Normalbetrieb bezogen auf eine Normal-Stundenproduktion (NSP) von Spinnmasse in einer Produktionslinie.

| Medien | | Min. Abfallmenge bezogen auf %NSP | Max. Abfallmenge bezogen auf %NSP | Erwartete Abfallmenge bezogen auf %NSP |
|---|---|---|---|---|
| Zellulosesuspensionen | (1) | 0 | 10 | 0 bis 5 |
| Zelluloselösungen | (2) | 0 | 50 | 5 bis 15 |
| Zelluloselösungen, auskoaguliert | (3) | 0 | 30 | 3 bis 8 |
| Zellulosefaser, endlos | (4) | 0 | 5 | 0,3 bis 0,8 |
| Zellulosefaser, geschnitten | (5) | 0 | 5 | 0 bis 0,5 |

**Tabelle 7**: Tägliche Abfallmengen im Anfahrbetrieb bezogen auf eine Normal-Stundenproduktion (NSP) von Spinnmasse in einer Produktionslinie

| Medien | | Min. Abfallmenge bezogen auf %NSP | Max. Abfallmenge bezogen auf %NSP | Erwartete Abfallmenge bezogen auf %NSP |
|---|---|---|---|---|
| Zellulosesuspensionen | (1) | 10 | 100 | 20 bis 50 |
| Zelluloselösungen | (2) | 100 | 400 | 150 bis 200 |
| Zelluloselösungen, auskoaguliert | (3) | 100 | 400 | 100 bis 150 |
| Zellulosefaser, endlos | (4) | 1 | 20 | 3 bis 8 |
| Zellulosefaser, geschnitten | (5) | 1 | 5 | 1 bis 2 |

(b) Zerkleinerung der Abfallstoffe

Die Zerkleinerung der in (a) genannten Abfallstoffe findet separat, oder nach Zusammenführung mehrerer oder aller statt. Die Zerkleinerung der Abfallstoffe kann in einem oder mehreren Schritten durchgeführt werden, mit dem Ziel eine Endkorngröße in einem Bereich zwischen 5 und 15 mm zu erreichen um ausreichend große Oberflächen für den nachfolgenden Extraktionsprozess zu schaffen.
Folgende Verfahrensschritte haben sich für die Zerkleinerung vorteilhaft erwiesen:

- Durch den Zerkleinerer wird gleichzeitig auch eine Durchmischung der Restabfälle bewirkt. Eine Mischung der verschiedenen Abfälle wie in (a) Sammlung der Abfallstoffe beschrieben steigert den Zerkleinerungseffekt von Zellulosefaserabfällen.
- Eine Vorzerkleinerung auf eine Korngröße des Abfalls von weniger als 50 mm, vorzugsweise weniger als 30 mm, insbesondere weniger als 20 mm, kann durch einen langsam laufenden Zerkleinerer besonders energieeffizient und betriebssicher durchgeführt werden. Ein Beispiel für das dabei erzeugte Gut ist in Figur 2 gezeigt. Dieses Verfahren mit einer langsam drehenden Rotorwelle ist besonders von Vorteil, da diese Geräte weniger Reibungsenergie eintragen, und damit die Abfallstoffe nicht thermisch beeinträchtigt werden, was zum Abbau von NMMO und zur Brandgefahr führen kann.
- Während der Zerkleinerung kann dem Abfallprodukt wässriges Lösungsmittel oder reines Wasser zugesetzt werden, damit schon während der Oberflächenvergrößerung eine Koagulation der Abfallstoffe erfolgt und das Zelluloselösungsmittel schon bereits im Zerkleinerungsschritt teilweise extrahiert wird.

Eine Nachzerkleinerung mit einem schnelllaufenden Schneidgerät, zum Beispiel einer Schneidmühle, kann dieses vorzerkleinerte Gut besonders effizient auf die Zielkorngröße zwischen 2 und 15 mm, vorzugsweise bei ca. 10 mm, reduzieren. Diese Nachzerkleinerung kann auch schon im Nassmilieu durchgeführt werden, wobei eine Schneidpumpe verwendet werden kann, um den Extraktions-Wasserstrom gemeinsam mit dem Feststoffgut durch das Schneidorgan zu pumpen. Diese Art der Mediumführung ist besonders vorteilhaft, da der Wasserstrom zugleich eine Kühlwirkung hat, gleichzeitig aber auch schon eine Lösungsmittelextraktion (Verfahrensschritt (c)) bewirkt.
Zur Vorzerkleinerung eignen sich besonders langsam laufende Schreddergeräte wie zum Beispiel:

- Slow Speed Granulator GSL der Firma ZERMA Zerkleinerungsmaschinenbau GmbH
- Single shaft shredder ZPS der Firma AMIS Maschinen-Vertriebs GmbH
- Single shaft shredder ANTARES der Firma Lindner Recyclingtech GmbH
- M&J FineShred der Firma Metso Waste Recycling

Zur Nachzerkleinerung eignen sich besonders schnelllaufende Schneidzerkleinerer wie zum Beispiel:

- Rotoplex Schneidmühle ALPINE der Firma Hosokawa Alpine AG
- Feinschneidmühle CS-Z der Firma Netzsch Lohnmahltechnik GmbH Schlagmühlen (z.B. zur Vorzerkleinerung): CEMTEC Cement and Mining Technology GmbH; Gebr. Jehmlich GmbH; J. Rettenmaier & Söhne GmbH + Co. KG; MINOX Siebtechnik GmbH SIEBTECHNIK GmbH;

Granulatoren, Reissmaschinen, Reibschneidmühlen:
Alexanderwerk GmbH; AMIS Maschinen Vertriebs GmbH; Automatik Plastics Machinery GmbH; BKG Bruckmann & Kreyenborg; Coperion GmbH; Dreher GmbH & Co KG, ECON GmbH; EREMA Ges.m.b.H. Gala K. + K.-Maschinen GmbH; Getecha GmbH; HB-Feinmechanik GmbH & Co. KG; Herbold Meckesheim GmbH; HOSOKAWA Alpine AG, Lindner Recycling Tech; Nordson XALOY Europe GmbH; Noris Plastic GmbH & Co. KG; Pallmann Maschinenfabrik GmbH & Co. KG; Plasma GmbH; Reduction Engineering GmbH; Rolf Schlicht GmbH; UNTHA Recyclingtechnik GmbH; Wanner Technik GmbH; Wittmann Robot.
Figur 6 zeigt einen erfindungsgemäßen Zerkleinerer (1) mit einem Materialsammelraum (2), in den zu zerkleinerndes Material (3) dosierbar oder chargenweise einfüllbar ist. Dem Materialsammelraum (2) kann ein Materialstapelraum (4) aufgesetzt sein, welcher im Wesentlichen abgedeckt ist und mit einem Zufuhrschacht (5) ausgestattet sein kann. Im Materialsammelraum (2) ist seitlich ein sich drehend gelagerter Rotor (6) angebracht, welcher in einem Gehäuse (7) eingebaut und im Materialsammelraum (2) sich eine zum Rotor zubewegende Speisedruckregler (8), zum Nachdrücken des zu zerkleinernden Materials (3) angeordnet ist. Die Steuereinrichtung (9) für den Speisedruckregler (8) ist so ausgeführt, dass der Speiser um eine Achse (10) schwenkbar ist, und dadurch das zu zerkleinernde Material intervallmäßig zum Rotor (6) befördert und auf den mit Schneidelementen (12) bestückten Rotor gedrückt wird.
Durch diese Zuförderung und Druckaufgabe auf das Material (3) wird gewährleistet, dass der Rotor (6) mit kontrollierter Menge Material beaufschlagt wird.

Sollte der Rotor (6) die über den Speisedruckregler (8) zugeführte Speisemenge an Material (3) und den dadurch ausgeübten Speisdruck nicht bewältigen, sofern das zerkleinerte Material (13) nicht genügend schnell aus dem Rotorgehäuse (7) befördert wird, wird der Anpressdruck des Speisers (8) derart zurückgenommen, dass sich der Rotor durch den reduziert aufgebrachten Druck freilaufen - "freizerkleinern" - kann. Bei Abfall der Rotorleistung wird der Speisedruckregler (8) verwendet, um Material (3) an den Rotor (6) zu befördern.

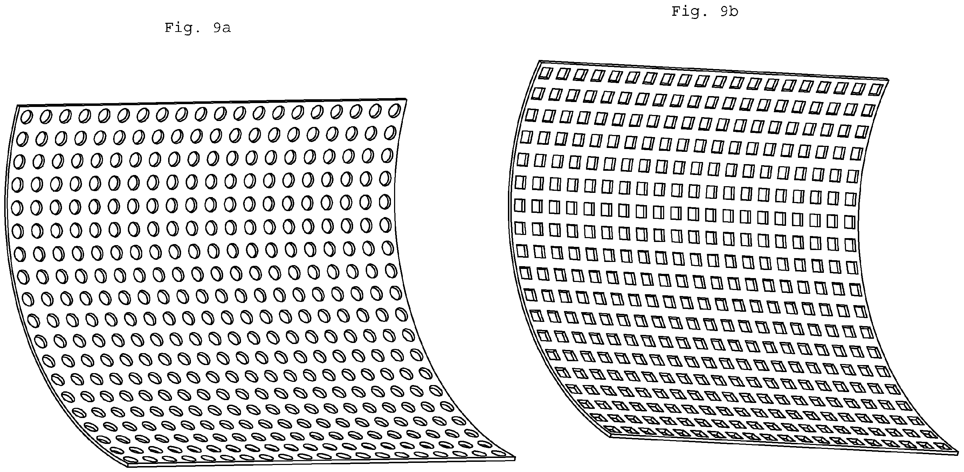

Der Zerkleinerungsgrad des zerkleinerten Materials (13) kann durch ein unterhalb des Rotors (6) angebrachtes Lochsieb oder Lochplatte (14) eingestellt werden. In Fig. 9 gezeigt, können Lochplatten mit eckigen (b) oder runden (a) Löchern zum Einsatz kommen, wobei der Durchmesser bzw. die Größe (bei eckigen oder anders förmigen Löchern: das Mittel der kleinesten und größten Dimension der Löcher) vorzugsweise zwischen 3 und 50 mm, speziell bevorzugt zwischen 5 und 30 mm, insbesondere zwischen 8 und 20 mm, gewählt wird.

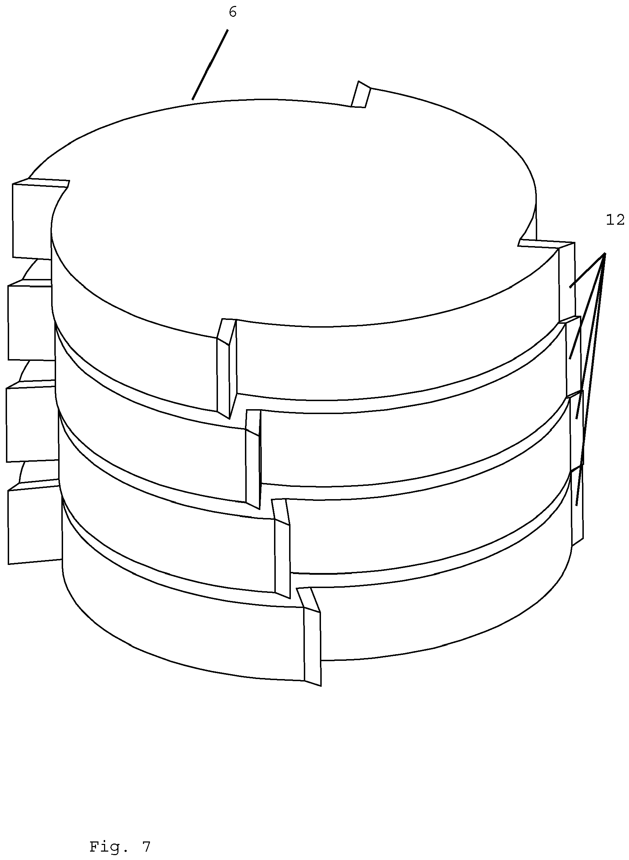

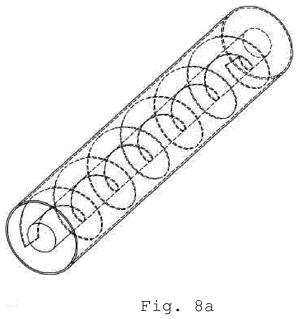

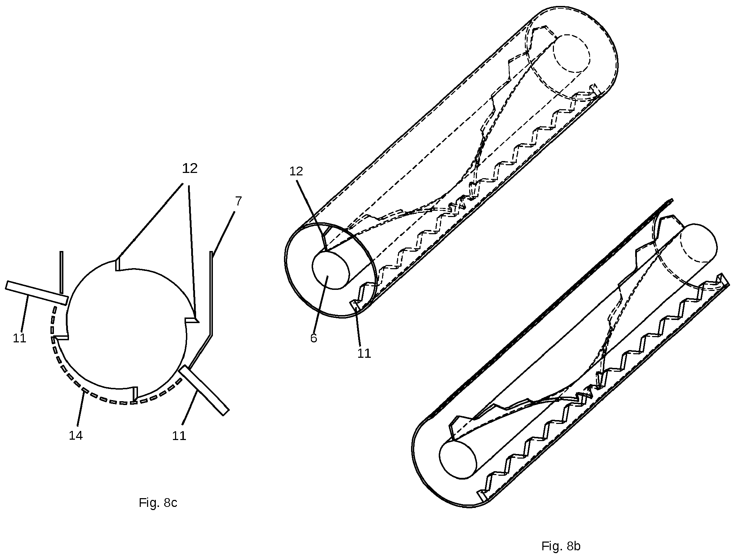

Der Rotor (6) kann mit Schneidelementen (12), wie hakenförmigen Zerreissern, Messern oder Messerplättchen oder Schneidkanten am Umfang vollflächig, spiralförmig umlaufend (Fig. 8b) oder sinusförmig gewendelt bestückt werden, wobei die Schneidelemente durch Verschrauben an Rotormesserhalterungen befestigt sind, oder aber auch fest verschweißt sein können. Fig. 7 zeigt einen Rotor mit Schneidelementen eines Zerkleinerers, welcher durch versetzte Einzelelemente aufgebaut ist. Vorzugsweise sind die Schneidkanten und/oder die Gegenkante gezahnt. Die Schneidkante und die Gegenkante sind weitgehend gegengleich mit einem maximal knappen zum Schneiden geeigneten Abstand zueinander oder ohne wesentlichen Abstand um aneinander schneidend vorbeibewegt werden zu können. Die gezahnte Ausführungsform optimiert das Schneiden und verhindert ein vorbeigleiten der zu schneidenden Materialien. Die Zahnspitze ist vorzugsweise durch Kanten in einem Winkel von 160° bis 30° gebildet.

Die Zerkleinerung des zugeführten Materials erfolgt zwischen den mit dem Rotor rotierenden Schneidelementen (12) und stationär angebrachten, nicht zwangsweise rotierenden, Gegenkanten (11), wie Gegenmesser- oder Statorabschlagkanten.

Nach der Abfallzerkleinerung, erfolgend zwischen den rotierenden Schneidelementen (12) und Gegenkanten (11), wird das aufgerissene Material unmittelbar durch eine Lochplatte (14) gedrückt, welche die Stückgutgröße gemäß der eingesetzten Loch-Siebgröße bestimmt, und kann kontinuierlich ausgetragen werden. Unter Einsatz eines unter dem Rotorgehäuse (7) und Austragsschacht (15) angebrachten Transportmittels (16), wie z.B. Transportbandes, Transportschnecke, Kettenförderers, oder einer Absauganlage wird das zerkleinerte Produkt gegebenenfalls zu einer weiteren Zerkleinerungsstufe oder zum Auslaugen und Auswaschen des Lösungsmittels weiterbefördert.

Die erfindungsgemäße Zerkleinerung und Materialaufbereitung zur weiteren Stückgutbehandlung wie Auslaugen, Waschen und Lösungsmittelrückgewinnung kann mit einem Einwellen-Zerkleinerer oder Mehrwellen-Zerkleinerer in horizontaler und/oder vertikaler Bauweise vorgenommen werden.

Ebenso kann das erfindungsgemäße Verfahren zu einer Grobzerkleinerung als Vorzerkleinerung mit anschließender ein- oder mehrstufigen Feinzerkleinerung eingesetzt werden. Die Zerkleinerungsgröße (grob, fein) kann durch die Lochgröße eingestellt werden.

Der erfindungsgemäße Zerkleinerer kann für alle zellulosischen Materialien eingesetzt werden und ist nicht auf den Einsatz von Lyocell-Materialien limitiert. So kann auch das Material anderer Formkörperherstellungsverfahren, wie dem Viskoseverfahren oder dem Cupro-Verfahren, eingesetzt werden. In diesen Ausführungsformen kann das zellulosische Material eine derivatisierte Zellulose sein, z.B. ein zellulose-Xanthogenat oder Alkalicellulose. Im Viskoseverfahren wird Zellstoff in mehreren Prozessstufen durch Behandlung mit Natronlauge zu Alkalicellulose umgewandelt und durch andere anschließender Umsetzung mit Schwefelkohlenstoff zu Cellulose-Xanthogenat derivatisiert. Nach erfolgter Derivatisierung wird durch weitere Zugabe von Natronlauge und Lösewasser die fertige Viskose-Spinnlösung erzeugt, die durch Spinndüsen in ein säurehaltiges Spinnbad gepumpt wird.

Dort entsteht durch Koagulation der Viskoselösung pro Spinndüsenloch ein Viskose-Filament. Durch Verstrecken und weitere Bearbeitungsschritte und dem Zusammenfassen der einzelnen Filamente entstehen Viskosefilamentgarne, welche auf Spulen aufgewickelt werden bzw. durch zusätzliches Schneiden der endlos ersponnenen Viskosefilamente werden Stapelfasern erzeugt. Ab dem Spinnprozess entstehen ebenfalls gewünschte und ungewünschte Produkte, welche erfindungsgemäß aufgearbeitet werden können.

Wird das erfindungsgemäße Verfahren im Viskoseprozess eingesetzt, liegt der Schwerpunkt nicht in der Rückführung von Lösungsmittel, sondern in der umweltgerechten Entsorgung der Spinn-und Restfaserabfälle, insbesondere durch Zuhilfenahme der Zerkleinerung. Ähnliche Prozessschritte werden bei der Derivatisierung der Cellulose nach dem Cupro-Verfahren eingesetzt. Im Cupro-Verfahren wird Zellstoff in einer ammoniakalischen Lösung von Tetraamminkupfer(II)-hydroxid aufgelöst. Die Lösung wird geformt und die erhaltenden Formkörper in gewünschter oder unerwünschter Form, wie Abfälle daraus, werden erfindungsgemäß verarbeitet, insbesondere zerkleinert. Formkörper in jeder Ausführungsform sind beispielsweise Filamente, Stapelfasern, Folien, Membranen.

Bevorzugt ist natürlich der Einsatz im Lyocell-Verfahren, da sich hier Synergien zur Lösungsmittelrückgewinnung ergeben. Auch der Zusatz von Flüssigkeiten während des Zerkleinerungsprozesses ist möglich. Durch den Zusatz von Wasser, Lösungsmittel oder Nicht-Lösungsmittel oder anderen Fällmitteln kann das zu zerkleinernde Abfallgut in der Zerkleinerungsstufe einerseits zur weiteren Fällung und Extraktion des Materials und/oder gleichzeitiger Wärmeabfuhr behandelt werden.

Somit betrifft die Erfindung auch einen Zerkleinerer mit einem Rotor mit hervorstehenden Reib- oder Schneidelementen, sowie eine oder mehrere Gegenkante(n), wobei die Schneidelemente an den Gegenkanten vorbeigleiten, sodass zwischen den Schneidelementen und den Gegenkanten befindliche Formkörper oder Formkörperabfälle zerkleinert werden. Diese Formkörper oder Formkörperabfälle enthalten vorzugsweise Zellulose, insbesondere nach einem Formgebungsverfahren in Lösung, wie dem Lyocellverfahren, Viskoseverfahren oder dem Cupro-Verfahren. Die Erfindung betrifft auch ein Verfahren zum Zerkleinern dieser Formkörper oder Formkörperabfälle durch den Zerkleinerer. Der Zerkleinerer hat vorzugsweise einen Speisedruckregler, der zu zerkleinernde Formkörper oder Formkörperabfälle gegen den Rotor oder die Reib- oder Schneidelementen drückt. Der Zerkleinerer hat vorzugsweise irgendein anderes oder mehrere der oben beschriebenen Merkmale oder alle davon. Vorzugsweise sind die Schneidkanten und/oder die Gegenkante gezahnt. Vorzugsweise wird ein Sieb nahe und/oder unterhalb des Rotors vorgesehen, um die Größe des geschnittenen Materials zu steuern.

(c) Extrahieren des Zelluloselösungsmittels

Die Extraktion des Zelluloselösemittels passiert für alle, in Verfahrensschritt (b) verarbeiteten Feststoffe gleichermaßen. Typischerweise wird dies bei Temperaturen zwischen 15 und 30°C durchgeführt und benötigt bei einer Korngröße unter 30mm eine Verweilzeit von 0,5 bis 2 Stunden. Dabei ist ein ständiges Rühren und Suspendieren des Feststoffes vorteilhaft. Folgende optionale Maßnahmen können durchgeführt werden, um die Extraktion zu beschleunigen:

- Eine Erhöhung der Extrationsmitteltemperatur auf 40 bis 70°C erhöht die Extraktionsgeschwindigkeit eines gleichen Gutes, und verringert die benötigte Verweilzeit auf etwa ein Viertel. Wenn diese Temperaturerhöhung durch eine Wärmerückgewinnung aus einem anderwärtig nicht verwendeten Abwärmestrom durchgeführt werden kann, ist dies besonders zu bevorzugen.
- Eine Reduktion der Korngröße verringert die benötigte Verweilzeit.
- Wenn die Extraktion mehrstufig im Gegenstromprinzip durchgeführt wird, verringert dies die Anforderungen an jede einzelne Extraktionsstufe, da die Wahrscheinlichkeit sinkt, dass Teile des noch lösemittelbehafteten Abfallproduktes das Extraktionsbecken sofort wieder in den nächsten Verfahrensschritt verlassen.

Die Extraktion findet vorzugsweise in einem offenen oder geschlossenen Behältnis, Tank oder Becken statt. Das Lösungsmittel-Feststoff-Gemisch ist in Bewegung versetzt, entweder durch Rühren oder eine gezielte Strömungsführung mit einer Pumpe. Optional kann die Temperatur gezielt auf einen Wert erhöht werden, entweder durch Vorwärmen des Lösungsmittel-Zulaufs oder auch durch direktes Einführen von Dampf in den Prozess.

(d) Entwässerung

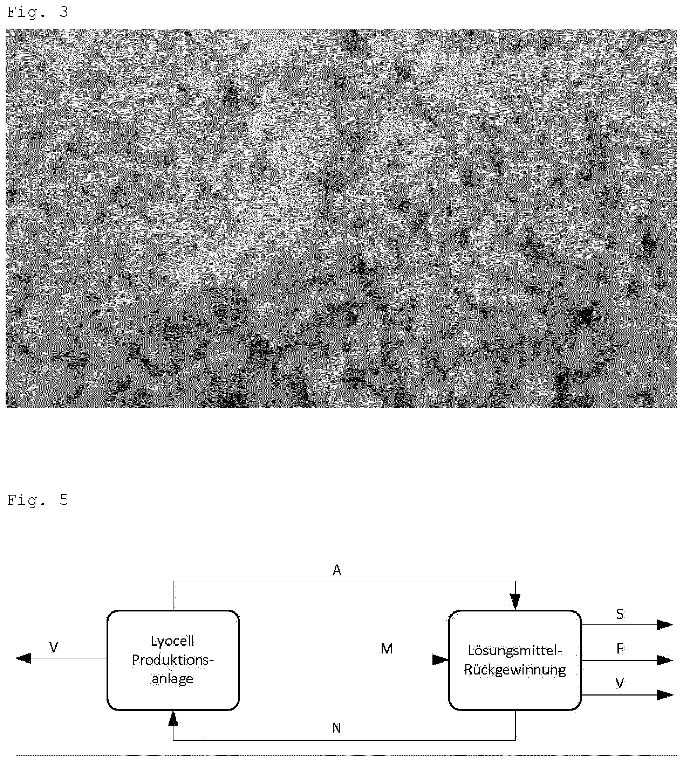

Der in Verfahrensschritt (c) extrahierte oder teilextrahierte Feststoff wird bei der Entwässerung vom lösungsmittelhaltigen Wasser getrennt. Der dabei erreichte Trockengehalt ist ausschlaggebend für die Effizienz des Extraktionsschritts. Der dabei entwässerte Feststoff kann nun wieder einer erneuten Extraktionsstufe zugeführt, oder bei ausreichend geringem Lösungsmittelgehalt als Abfallprodukt aus dem Prozess ausgeschleust werden. Ein Beispiel für ein solches Abfallprodukt ist in Figur 3 gezeigt. Die Zielkonzentration des Lösungsmittels im Abfallfeststoff sollte unter Berücksichtigung der Rückgewinnungsrate unter 3% liegen. Eine weitere Reduktion der Lösungsmittelkonzentration kann je nach Investitionskosten der dafür nötigen Verfahrensdurchführung von Vorteil sein.

Die in Verfahrensschritt (d) abgetrennten Feststoffe können einer anderweitigen Verwertung zugeführt werden. So etwa können die abgetrennten Zellulosebestandteile als Kompostierungsmaterial, als Bauzuschlagstoffe im Straßenbau, für Drainagefüllungen oder bei Einbettungen eingesetzt werden.

Im ersten Entwässerungsschritt ist das Ziel den Feststoff grob vom Lösungsmittel zu trennen. Da sowohl Feststoff als auch das Filtrat in einer weiteren Stufe weiterbearbeitet werden sollen gibt es keine besondere Anforderung an die Trennschärfe. Deshalb sind besonders kontinuierlich laufende Fest-Flüssig-Separatoren geeignet, wie zum Beispiel:

- Separator PSS der Firma FAN Separatoren GmbH
- Separator PSS der Firma Erich Stallkamp ESTA GmbH
- Mikrodrehfilter MDF der Firma ABZ Zierler GmbH
- Bandpresse der Firma Flottweg SE

Im letzten Entwässerungsschritt ist das Ziel den lösungsmittelfreien Abfallfeststoff so gut wie möglich von Flüssigkeit zu befreien, und dabei den Feststoffgehalt im Filtrat auf ein Mindestmaß zu reduzieren. Dafür können generell auch die oben genannten Geräte verwendet werden, bevorzugte Geräte sind aber zum Beispiel: Kammerfilterpresse der Firma Welders Filtration Technology NV SA; oder Dekanter-Zentrifuge der Firma Flottweg SE. Ultrafiltrationsanlagen: Aqua-System Technologie GmbH; Krones AG; OSMO Membrane Systems GmbH;

Mikrofiltrationsanlagen:

Annen Verfahrenstechnik GmbH; Atec Automatisierungstechnik GmbH; ECOFLUID Handels GmbH; Hydro-Elektrik GmbH; Lanz-Anliker AG; Lenzing Technik GmbH; Tetra Pak Processing GmbH; WAG Wasseraufbereitung GmbH; Umkehrosmoseanlagen:

AS Schmertmann GmbH; Decker Verfahrenstechnik GmbH; Enviro-FALK GmbH Prozesswasser-Technik; membraPure Gesellschaft für Membrantechnik GmbH;

Ultrafiltrationsmembranhersteller / Mikrofiltrationsmembran:

KOCH Membrane Systems GmbH / John Zink KEU GmbH; MICRODYN-NADIR GmbH; MTS & Apic Filter GmbH & Co. KG; SOMA GmbH & Co. KG Umkehrosmosemembran:

CWG® Watertechnology GmbH; Kalle Wassertechnik; KOCH Membrane Systems GmbH / John Zink KEU GmbH; OSMO Membrane Systems GmbH; POREX Membrane;

### (e) Sammlung und Reinigung aller lösemittelhaltigen Abwässer

Die in Verfahrensschritten (a) bis (d) erzeugten Abwässer werden vorzugsweise gemeinsam mit den gesamten, in der Lyocell-Anlage erzeugten, lösemittelhaltigen Abwässer (6) gesammelt. Optional können je nach Verschmutzungsgrad der einzelnen Abwasserströme diese vor der Sammlung getrennt, in einem oder in mehreren Filtern von groben Feststoffverschmutzungen befreit werden. Ziel ist ein maximaler durchschnittlicher Feststoffgehalt des lösemittelhaltigen Sammelabwasser von 1000 mg/L oder weniger, z.B. von 20 bis 1000 mg/L, vorzugsweise 200 mg/L oder weniger und besonders zu bevorzugen 50 mg/L oder weniger.

Das gesammelte lösemittelhaltige Abwasser wird (vorzugsweise gemeinsam) in einer oder mehreren Feinfiltrationsstufen gereinigt. Dieser Filtrationsschritt kann durch ein oder mehrere verschiedene Filtergeräte durchgeführt werden, wobei sich Microsieb- oder Mehrschichtfilter besonders eignen. Ziel der Filtration ist der Schutz der nachfolgenden Aufbereitung vor Fouling durch Feststoffpartikel. Je nach Trennschärfe können in dieser Filtrationsstufe auch farbgebende Komponenten abgeschieden werden, was besonders zu bevorzugen ist.

Die Sammlung der Abwässer findet generell in einem flüssigkeitsdichten und chemisch beständigen Becken statt. Die einzelnen Prozess-Abwässerströme können wie beschrieben vorfiltriert werden. Dafür eignen sich je nach Verschmutzungsgraden zum Beispiel: Kantenspaltfilter, Korbfilter, oder bei gröberer Verschmutzung jeder in (d) genannte Fest-Flüssig-Separator. Das gesammelte Abwasser wird nun zum Schutz der nachfolgenden Weiterverarbeitung feinfiltriert. Dafür generische eingesetzte Verfahren sind zum Beispiel: Mehrschichtfilter, Mirco- und Membranfilteranlagen.

### (f) Entionisierung

In diesem Verfahrensschritt werden ionische Verunreinigungen mit Hilfe eines oder mehreren Anionen- und Kationentauscher entfernt. Die Entionisierung findet gewöhnlich in einem getrennten Anionen- und Kationentauscher statt, wobei eine Aneinanderreihung von Ionenaustauschern ausgeführt in der Reihenfolge Anionentauscher folgend von Kationentauscher verfahrensgemäß vorteilhaft sein kann.

Die mittlere Verweilzeit des Filtrats in dem verfahrensgemäß vorgesehenen Ionenaustauscher Abschnitt beträgt zwischen 2 und 20 Minuten, insbesondere bevorzugt zwischen 8 und 12 Minuten. Die Entionisierung dient der Gewährleistung der Prozesssicherheit des Lyocell-Prozesses, da dabei schadhaft wirkende Ionen entfernt werden.

### (g) Aufkonzentrierung/ Anreicherung des Lösungsmittels

Das Zelluloselösungsmittel wird in der weiteren Prozessfolge der Aufkonzentrierung, zum Beispiel einer mehrstufigen Eindampfanlage, zugeführt. Dabei sollte zumindest eine Konzentration des Lösungsmittels erreicht werden, damit die Lösung erneut zum Lösen oder Suspendieren von Zellulose geeignet ist. Die Lösungskonzentration muss noch nicht erreicht werden, da beim Überführen von der Zellulosesuspension zur Lösung Nicht-Lösungsmittel entfernt wird. Vorzugsweise werden mindesten 50% (Masse-%) des Lösungsmittels erreicht. Allerdings können auch höhere Konzentrationen zur Handhabung geringerer Volumen (zur späteren Verdünnung mit Nicht-Lösungsmittel) erreicht werden. Das vorzugsweise auf über 70%, vorzugsweise 83 bis 85%, (Gewichtsprozent) eingedampfte Zelluloselösungsmittel wird in weiterer Folge als Make-Up Lösungsmittel zur weiteren Verwendung dem Prozessschritt Zellulosesuspensionsherstellung zugeführt.

Die rückgeführten wässrigen Lösungsmittelströme finden ihre Verwendung als Make-Up Lösungsmittel in der kontinuierlich geführten Lösungsherstellung. Das erfindungsgemäße Verfahren erlaubt es somit, die organischen Rest- oder Rohstoffe sowie Abwässer, anfallend in einem Zellulosefaser Herstellungsverfahren, wieder in ihren verwendbaren Ursprungszustand zurückzuversetzen, und den Lösungsmittelkreis zu schließen.

Ferner ergibt sich aus der Tatsache, dass das Verfahren mit nachwachsenden abbaubaren Roh- oder Reststoffen durchgeführt wird, eine in Hinblick auf die $CO_2$-Emissionen ausgeglichene und umweltneutrale Bilanz, da der abgetrennte lösungsmittelbefreite Feststoff Zellulose bedenkenlos der Kompostierung zugeführt werden kann.

Weitere Einzelheiten, Merkmale und Vorteile der Erfindung ergeben sich aus nachfolgender Beschreibung eines Ausführungsbeispiels anhand der Figuren.

Figur 4 zeigt schematisch ein vereinfachtes Blockschaltbild, wobei dieses Schaltbild sowohl ein erfindungsgemäßes Verfahrensschema, als auch den Aufbau einer zur Durchführung eines erfindungsgemäßen Verfahrens geeigneten erfindungsgemäßen Vorrichtung widerspiegelt. Figur 4 zeigt neben den Basiskomponenten des erfindungsgemäßen Verfahrens bzw. der erfindungsgemäßen Vorrichtung auch weitere Elemente als Bestandteile bevorzugter Ausführungsformen.

Hier werden in Folge Beispiele für verschiedene einsetzbare Gerätetypen gelistet. Diese Anführung ist nicht vollständig, und die einzelnen Geräte können jederzeit durch andere Maschinen, die einen ähnlichen Verfahrenseffekt erzielen, ersetzt werden.

Für die Berechnung der Rückgewinnungsrate des Lösemittels, insbesondere N-Methylmorpholin N-Oxid, in der Lyocell-Produktionsanlage kann bei Anwendung dieses Verfahrens eine einfache Bilanz aufgestellt werden.

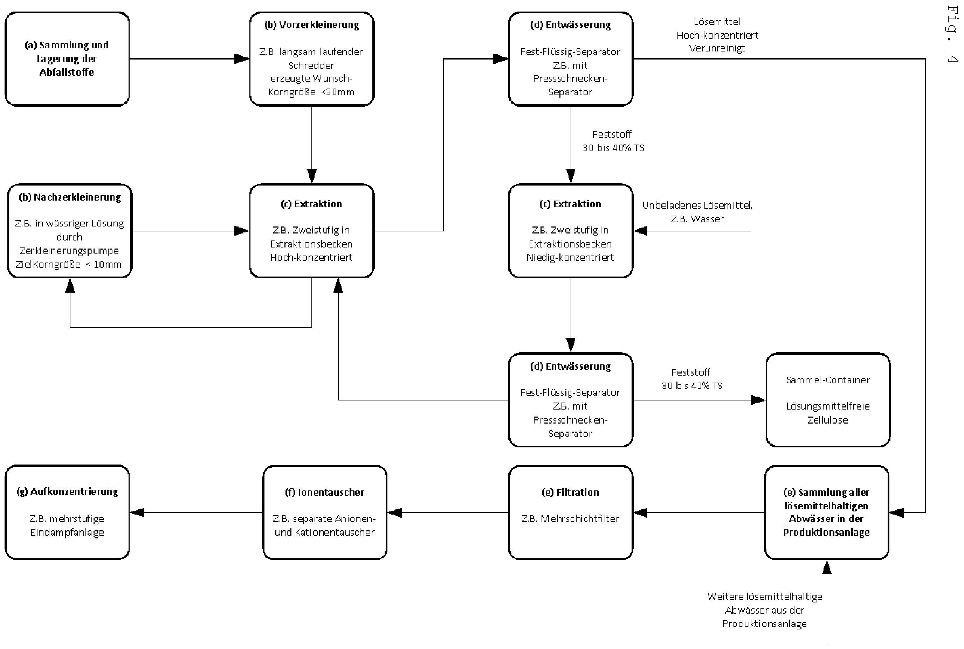

In Figur 5 ist der Kreislauf des Lösemittels im Lyocell-Prozess dargestellt:

- Strom A beinhaltet sämtliche lösemittelhaltige Abfall-Feststoffe ((1) bis (5)) sowie Abwässer ((6)).
- Strom S stellt die Summe der im Verfahrensschritt (e) entstehenden, ausgepressten Abfall-Feststoffe dar, die die Produktions- und Rückgewinnungsanlage verlassen.
- Strom F stellt die Summe der Abwasserströme dar, die die Produktions- und Rückgewinnungsanlage verlassen.
- Die beiden Ströme V stellen andere, bisher nicht beschriebene Lösungsmittelverluste dar. Dazu gehören unter anderem thermische Abbauverluste und Verluste im erzeugten Zelluloseprodukt. In der weiteren Berechnung wird mit der Summe aller entsprechenden Verluste als Einzelstrom gearbeitet.
- Strom M stellt den Make-Up Strom des Lösemittels dar, der nötig ist, um Lösemittelverluste auszugleichen.
- Strom N stellt den konzentrierten Lösemittelstrom dar, der wieder dem Produktionsprozess zugeführt wird.

Aus dieser Bilanz ergibt sich folgende Funktion für die Rückgewinnungsrate RGR:

$$RGR = 1 - F_F - F_S - F_V$$

wobei die Verlustfaktoren $F_F$, $F_S$ und $F_V$ wie folgt definiert sind:

$$F_F = \frac{\dot{m}_{F,NMMO}}{\dot{m}_{A,NMMO}}, F_S = \frac{\dot{m}_{S,NMMO}}{\dot{m}_{A,NMMO}} \text{ und } F_V = \frac{\dot{m}_{V,NMMO}}{\dot{m}_{A,NMMO}}$$

wobei zum Beispiel $\dot{m}_{F,NMMO}$, mit der Einheit kg/h, für den Massenstrom des Lösungsmittels (z.B. N-Methylmorpholin N-Oxid) steht, dass sich durchschnittlich im Strom F der Figur 5 befindet. Der Faktor $F_F$ beschreibt somit das Verhältnis des Lösungsmittelstromes, das beim Lyocell-Prozess im Abwasser verloren geht, im Vergleich zum gesamten eingesetzten Lösungsmittel, $F_S$ beschreibt das Verhältnis des Lösungsmittelstromes, das beim Lyocell-Prozess im Feststoffabfall verloren geht, im Vergleich zum gesamten eingesetzten Lösungsmittel und $F_V$ beschreibt das Verhältnis aller Lösungsmittelströme, die nicht in $F_F$ oder $F_S$ enthalten sind, und beim Lyocell-Prozess verloren gehen, im Vergleich zum gesamten eingesetzten Lösungsmittel.

Der Lösungsmittelstrom F ist im Rahmen dieses Verfahrens stark von der Ausführung des Ionentauscher-Verfahrensschritts (f) abhängig. Erfahrungswerte für den resultierenden Verlustfaktor $F_F$ liegen bei etwa 0,0033.

Der undefinierte Gesamtverluststrom V im Rahmen dieses Verfahrens ist bedingt von der Ausführung der Aufkonzentrierung (g) abhängig.

Der Verlustfaktor $F_S$ ist alleinig abhängig von dem im Feststoffabfall der Verfahrensstufe (d) verbleibenden Lösungsmittel, welcher durch die Verfahrensschritte (a) bis (d), und die darin ausgewählten Verfahrensvarianten und eingesetzten Geräte abhängig ist.

Als Beispiel für eine gute Ausführung dieses Verfahrens kann der Verlustfaktor wie folgt berechnet werden:
Bei der in **Tabelle 6** angegebenen Schätzungen der einzelnen Abfallströme ergeben sich durchschnittliche Mengen für den täglichen Feststoffabfall von etwa 8 bis 25% einer Normal-Stundenproduktion von Spinnmasse im Normalbetrieb.

Daraus resultiert in Verfahrensschritt (e) ein ausgewaschener, ausgepresster Feststoffabfall, der noch einen Rest-Lösungsmittelgehalt aufweist.

Dieser lässt sich nach folgender Formel berechnen:

$$\dot{m}_{S,NMMO} = \dot{m}_S \cdot w_{S,NMMO}$$

wobei $\dot{m}_S$ den gesamten durchschnittlichen Abfallstrom S in kg/h und $w_{S,NMMO}$ die durchschnittliche Lösungsmittelkonzentration in Gewichtsprozent in diesem Abfallstrom S bezeichnet.

Daraus resultiert beim obig angeführten, maximalen Schätzwert für die durchschnittliche Feststoffabfallmenge, gesammelt in Verfahrensschritt (a), im Normalbetrieb von täglich 25% einer Normal-Stundenproduktion von Spinnmasse, ein Verlustfaktor $F_S$ von weniger als 0,0001, bei einer Rest-Lösungsmittelkonzentration $w_{S,NMMO}$ von 3% im Abfallprodukt des Verfahrensschritts (d).

**Patentansprüche**

1. Verfahren zur Regeneration eines Lösungsmittels von Zellulose bei einem Zelluloseformkörperherstellungsverfahren, umfassend die Schritte

   A) kontinuierliches oder diskontinuierliches Verfahren zur Herstellung fester Zelluloseformkörper aus einer Zelluloselösung, welches die Schritte umfasst

      i) Zur-Verfügung-Stellen einer Zelluloselösung aus gelöster Zellulose und einem Zellulose-Lösungsmittel und vorzugsweise einem Nicht-Lösungsmittel, insbesondere bevorzugt Wasser,
      ii) Formen der Zelluloselösung in eine gewünschte geometrische Form,
      iii) Verfestigen der geformten Zelluloselösung zu Zelluloseformkörpern in einer Koagulationsflüssigkeit,
      iv) Herauslösen oder extrahieren des Lösungsmittels aus den Zelluloseformkörpern durch Nicht-Lösungsmittel, vorzugsweise Wasser oder wässriges Medium,

   wobei während des kontinuierlichen oder diskontinuierlichen Verfahrens Formkörperabfälle der Zelluloselösung in einer ungewünschten und optional der gewünschten Form anfallen,
   B) Sammeln der Formkörperabfälle der ungewünschten Form und optional der gewünschten Form,
   C) Zerkleinern der optional lösungsmittelhaltigen und/oder nicht lösungsmittelhaltigen Formkörperabfälle aus Schritt B),
   D) Extrahieren von Lösungsmittel aus den zerkleinerten Formkörperabfällen.

2. Verfahren nach Anspruch 1, **dadurch gekennzeichnet, dass** das Formen der Zelluloselösung in Schritt ii) ein Spinnlösungsextrudieren, oder ein Spinnen zu Fäden, Filamenten oder Folien ist, wobei Formkörperabfälle in ungewünschter Form Verklumpungen der Fäden, Filamente oder Folien sind.

3. Verfahren nach Anspruch 1 oder 2, **dadurch gekennzeichnet, dass** gewünschte oder ungewünschte Formkörperabfälle nach dem Formen, entweder alleine oder mit festen lösungsmittelhaltigen Zelluloseabfällen, die vor dem Formen oder nach der Zerkleinerung anfallen, gemischt werden und gemeinsam zerkleinert werden.

4. Verfahren nach einem der Ansprüche 1 bis 3, wobei Zerkleinern in Schritt C) durch mechanische Krafteinwirkung erfolgt, vorzugsweise in einer Mühle.

5. Verfahren nach Anspruch 4, **dadurch gekennzeichnet, dass** zur Zerkleinerung ein Zerkleinerer mit einem Rotor mit hervorstehenden ein oder mehreren Schneidelementen, und eine oder mehrere Gegenkante(n), wobei die Schneidelemente an den Gegenkanten vorbeigleiten, sodass zwischen den Schneidelementen und den Gegenkanten befindliche Formkörper oder Formkörperabfälle zerkleinert werden und die Formkörper oder Formkörperabfälle werden der Zerkleinerung mittels einer Nachdrückeinrichtung kontinuierlich oder diskontinuierlich den Schneidelementen zugeführt wird.

6. Verfahren nach einem der Ansprüche 1 bis 5, **dadurch gekennzeichnet, dass** das Lösungsmittel für Zellulose N-Methylmorpholin-N-oxid ist oder ein ionisches Lösungsmittel, vorzugsweise mit einem Ammonium-, Pyrimidium- oder Imidazoliumkation, insbesondere bevorzugt 1,3-Dialkyl-imidazolium, speziell bevorzugt Butyl-3-methyl-imidazolium oder 1-Ethyl-3-methyl-imidazolium.

7. Verfahren nach einem der Ansprüche 1 bis 6, **dadurch gekennzeichnet, dass** das Lösungsmittel oder das wässrige Lösungsmittelgemisch der Lösungsmittel-haltigen Wasch- und Schneidflüssigkeiten aus Schritt A) iv) und der Lösungsmittel-haltigen, wässrigen Extraktionsflüssigkeiten aus Schritt D) nach dem Herauslösen bzw. Extrahieren angereichert wird; vorzugsweise um eine Lösung des Zellulose-Lösungsmittels, die geeignet ist, Zellulose zu lösen oder zu suspendieren, zu erhalten, oder vorzugsweise in einer Konzentration von mindestens 50% (Masse-%) Lösungsmittel in der Lösung, insbesondere im Fall von N-Methylmorpholin-N-oxid als Lösungsmittel.

8. Verfahren nach Anspruch 7, wobei das Anreichern Verdampfen von Nicht-Lösungsmittel, vorzugsweise Wasser, umfasst; oder Kristallisieren des Lösungsmittels, und/oder ein dynamisches Trennverfahren umfasst.

9. Verfahren nach einem der Ansprüche 1 bis 8, **dadurch gekennzeichnet, dass** Koagulationsflüssigkeit, von den Zelluloseformkörpern aus Schritt A) iii) nach Abtransport aus einem Behälter mit Koagulationsflüssigkeit abgetrennt wird und zusammen mit extrahiertem Lösungsmittel aus Schritt D) gesammelt wird.

10. Verfahren nach einem der Ansprüche 1 bis 9, **dadurch gekennzeichnet, dass** die Koagulationsflüssigkeit in einem Behälter ist und dem Behälter eine Auffangwanne zum Sammeln von durch den Abtransport von Zelluloseformkörpern aus dem Behälter anfallende abtropfende Zellulose-Lösungsmittel zugeordnet ist.

11. Verfahren nach einem der Ansprüche 1 bis 10, **dadurch gekennzeichnet, dass** die Schritte A) i) bis iv) in einer oder mehreren Spinnanlage(n) durchgeführt werden, wobei aus der Spinnanlage austretende lösungsmittelbeinhaltende wässrige Koagulationsflüssigkeit über einen Kanal oder einem Kanalsystem gesammelt und zusammen mit dem Lösungsmittel oder wässrigen Lösungsmittelgemisch aus Schritt iv) vermengt, der Reinigung, der Aufkonzentrierung und Wiederverwendung zugeführt wird.

12. Vorrichtung zur Regeneration eines Lösungsmittels von Zellulose bei einem Verfahren zur Herstellung von Zelluloseformkörpern, umfassend eine Spinnmasseherstellungsanlage, Spinnmassefiltrationanlage, Spinnanlage mit einem Extruder, Extrusionspumpen, Wärmetauscher , Extrusionswerkzeuge, Spinndüsen, einem Behälter für Koagulationsflüssigkeit, welcher nach einem Spalt unter Extrusionsmitteln, vorzugsweise Spinndüsen, angeordnet ist, einer Abzugsvorrichtung, einer Schneidvorrichtung, ein Feststoffsammelbehälter für verfestigte Zelluloseformkörper, ein Zerkleinerer für verfestigte Zelluloseformkörper, eine mechanische Trennanlage zur Trennung von Feststoffen in Flüssigkeiten, eine Anlage zum Ionenaustausch, eine Anlage zum Aufkonzentrieren des wässrigen Zelluloselösungsmittel oder Kombinationen davon.

13. Vorrichtung nach Anspruch 12, weiters umfassend eine oder mehrere Auffangwannen zum Sammeln von wässrigem Lösungsmittel beim Abtransport von gewünschten oder durch Formen in geometrischer Form sich ergebenden Formkörpern oder Zelluloselösung in einer ungewünschten Zelluloseformkörperform aus einem oder mehreren Koagulationsflüssigkeitsbehälter anfallende, im Zuge des kontinuierlichen Prozesses abgetrenntes Zelluloselösungsmittel oder wässriges Zellulose-Lösungsmittel; und/oder mit einem Kanal am Boden zum systematischen Sammeln und Weiterleiten von aus der Spinnmasseherstellungsanlage, Spinnmassefiltrationsanlage, Spinnanlage, aus der Evaporationsanlage ausgetretene lösungsmittelhaltige Flüssigkeit, welche in einen Flüssigkeitssammelbehälter führt.

14. Vorrichtung nach Anspruch 12 oder 13, mit einem Evaporator zum Abdampfen von Nicht-Lösungsmittel aus Zellulose-Lösungsmittel-haltigen Flüssigkeiten.

15. Vorrichtung nach einem der Ansprüche 12 bis 14, **dadurch gekennzeichnet, dass** die Zerkleinerung mindestens zweistufig ist, vorzugsweise die Schritte Grobzerkleinerung und Feinzerkleinerung umfasst, optional die Zerkleinerung trocken und/oder nass durchgeführt wird, vorzugsweise mit Schlagmühlen, Schleudermühlen mit Sieben mit Öffnungen oder Schneidmaschinen, Reissmaschinen und/oder Verreibmaschinen, vorzugsweise mit einem Rotor mit hervorstehenden Reib- oder Schneidelementen sowie mit einem Sieb mit Öffnungen, wobei die Reib-, Reiss- oder Schneidelemente über die Sieböffnungen geführt werden.

Fig. 1

1) Cellulosesuspensionen

2) Celluloselösungen

3) auskoagulierte Celluloselösungen

4) Cellulosefaserprodukte in endloser Form

5) Cellulosefaserprodukte in geschnittener Form

6) Lösemittelhaltige Abwässer

Abwassersystem für
Lösemittelhaltige Abwässer

Rohstoffe Mischen → Lösen → Filtern → Spinnen → Extraktion/ Waschen/ Schneiden → Trocknen → Post Processing

Fig. 2

Fig. 3

Fig. 5

Fig. 4

**(a) Sammlung und Lagerung der Abfallstoffe**

**(b) Vorzerkleinerung**
Z.B. langsam laufender Schredder erzeugte Wunsch-Korngröße <30mm

**(b) Nachzerkleinerung**
Z.B. in wässriger Lösung durch Zerkleinerungspumpe ZielKorngröße < 10mm

**(c) Extraktion**
Z.B. Zweistufig in Extraktionsbecken Hoch-konzentriert

**(d) Entwässerung**
Fest-Flüssig-Separator Z.B. mit Pressschnecken-Separator

Lösemittel Hoch-konzentriert Verunreinigt

Feststoff 30 bis 40% TS

**(c) Extraktion**
Z.B. Zweistufig in Extraktionsbecken Niedig-konzentriert

Unbeladenes Lösemittel, Z.B. Wasser

**(d) Entwässerung**
Fest-Flüssig-Separator Z.B. mit Pressschnecken-Separator

Feststoff 30 bis 40% TS

Sammel-Container Lösungsmittelfreie Zellulose

**(e) Sammlung aller lösemittelhaltigen Abwässer in der Produktionsanlage**

Weitere lösemittelhaltige Abwässer aus der Produktionsanlage

**(e) Filtration**
Z.B. Mehrschichtfilter

**(f) Ionentauscher**
Z.B. separate Anionen- und Kationentauscher

**(g) Aufkonzentrierung**
Z.B. mehrstufige Eindampfanlage

Fig. 6

Fig. 7

Fig. 8a

Fig. 8b

Fig. 8c

Fig. 9b

Fig. 9a

Europäisches Patentamt
European Patent Office
Office européen des brevets

**EUROPÄISCHER RECHERCHENBERICHT**

**Nummer der Anmeldung**

EP 19 17 5647

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 104 711 706 B (CHINA TEXTILE ACADEMY) 5. Oktober 2016 (2016-10-05) | 1-6,9, 11,15 | INV. D01F13/02 |
| Y | * Zusammenfassung * <br> * Ansprüche * <br> * Abbildungen * <br> ----- | 7,8,10, 12-14 | |
| Y | WO 97/07268 A1 (CHEMIEFASER LENZING AG [AT]; MUELLEDER EDUARD [AT] ET AL.) 27. Februar 1997 (1997-02-27) <br> * Seite 1, Zeile 1 - Zeile 6 * <br> * Seite 2, Zeile 9 - Seite 3, Zeile 2 * <br> ----- | 7,8, 12-14 | |
| Y | WO 01/86041 A1 (ZIMMER AG [DE]; ZIKELI STEFAN [AT]; ECKER FRIEDRICH [AT]) 15. November 2001 (2001-11-15) <br> * Seite 8, Zeile 6 - Zeile 9 * <br> * Seite 12, Zeile 22 - Zeile 25 * <br> * Abbildung 1 * <br> ----- | 10 | |
| A | Shaokai Zhang ET AL: "Regenerated Cellulose by the Lyocell Process, a Brief Review of the Process and Properties", , 1. Januar 2018 (2018-01-01), XP055637857, Gefunden im Internet: URL:https://ojs.cnr.ncsu.edu/index.php/Bio Res/article/viewFile/BioRes_13_2_Zhang_Rev iew_Regenerated_Cellulose_Lyocell_Process/ 6095 [gefunden am 2019-10-31] * das ganze Dokument * <br> ----- | 1-15 | RECHERCHIERTE SACHGEBIETE (IPC) <br><br> D01F |
| A | WO 2005/113868 A1 (ZIMMER AG [DE]; ZIKELI STEFAN [AT]; LONGIN MICHAEL [AT]) 1. Dezember 2005 (2005-12-01) <br> * Seite 16, Zeile 8 - Zeile 20 * <br> * Beispiele * <br> ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 1. November 2019 | Fiocco, Marco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 17 5647

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-11-2019

| Im Recherchenbericht angeführtes Patentdokument | | Datum der Veröffentlichung | Mitglied(er) der Patentfamilie | | | Datum der Veröffentlichung |
|---|---|---|---|---|---|---|
| CN 104711706 | B | 05-10-2016 | KEINE | | | |
| WO 9707268 | A1 | 27-02-1997 | AT | 402643 | B | 25-07-1997 |
| | | | AU | 699512 | B2 | 03-12-1998 |
| | | | BR | 9606589 | A | 18-11-1997 |
| | | | CA | 2202625 | A1 | 27-02-1997 |
| | | | CN | 1163639 | A | 29-10-1997 |
| | | | DE | 59611015 | D1 | 01-07-2004 |
| | | | EP | 0783606 | A1 | 16-07-1997 |
| | | | JP | H10507498 | A | 21-07-1998 |
| | | | KR | 100423084 | B1 | 18-06-2004 |
| | | | NO | 310835 | B1 | 03-09-2001 |
| | | | TW | 336958 | B | 21-07-1998 |
| | | | US | 5773655 | A | 30-06-1998 |
| | | | WO | 9707268 | A1 | 27-02-1997 |
| | | | ZA | 9606708 | B | 18-02-1997 |
| WO 0186041 | A1 | 15-11-2001 | AT | 274079 | T | 15-09-2004 |
| | | | AU | 6386701 | A | 20-11-2001 |
| | | | BR | 0111166 | A | 15-04-2003 |
| | | | CA | 2408304 | A1 | 06-11-2002 |
| | | | CN | 1429288 | A | 09-07-2003 |
| | | | DE | 10023391 | A1 | 15-03-2001 |
| | | | EP | 1280946 | A1 | 05-02-2003 |
| | | | KR | 20030004398 | A | 14-01-2003 |
| | | | PL | 358750 | A1 | 23-08-2004 |
| | | | TW | 555903 | B | 01-10-2003 |
| | | | US | 2003160348 | A1 | 28-08-2003 |
| | | | WO | 0186041 | A1 | 15-11-2001 |
| | | | ZA | 200209030 | B | 06-09-2004 |
| WO 2005113868 | A1 | 01-12-2005 | AT | 401436 | T | 15-08-2008 |
| | | | CN | 1981075 | A | 13-06-2007 |
| | | | DE | 102004024030 | A1 | 08-12-2005 |
| | | | EP | 1747307 | A1 | 31-01-2007 |
| | | | KR | 20070012851 | A | 29-01-2007 |
| | | | TW | I297742 | B | 11-06-2008 |
| | | | US | 2008048358 | A1 | 28-02-2008 |
| | | | US | 2010219547 | A1 | 02-09-2010 |
| | | | US | 2013049244 | A1 | 28-02-2013 |
| | | | WO | 2005113868 | A1 | 01-12-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8932471 B
- WO 2013030400 A1
- EP 18191628 A
- WO 2009098073 A1
- WO 2011124387 A1
- US 5948905 A
- WO 2014085836 A1
- WO 03029329 A
- WO 2006000197 A1
- CN 104711706
- US 20110226427 A1
- WO 2018115443 A1
- EP 0448924 A
- WO 0212599 A1

**In der Beschreibung aufgeführte Nicht-Patentliteratur**

- **ZHANG et al.** *BioResources,* 2018, vol. 13 (2), 4577-4592
- **PEREPELKIN.** *Fibre Chemistry,* 2007, vol. 39 (2), 163-172
- **SINGHA.** *International Journal of Materials Engineering,* 2012, vol. 2 (3), 10-16
- **PARVIAINEN et al.** *RSC Adv.,* 2015, vol. 5, 69728-69737
- **LIU et al.** *Green Chem.,* 2017
- **HAURU et al.** *Zellulose,* 2014, vol. 21, 4471-4481
- **FERNÄNDEZ et al.** *J Membra Sci Technol,* 2011, vol. S, 4
- **HAN et al.** *Journal of Textile Research,* 2008, vol. 29 (6), 15-19
- Recovery of ionic liquids from wastewater by nanofiltration. *Journal of Membrane Science and Technology,* 2011, 4-8